# EUROPEAN PATENT APPLICATION

(11) **EP 1 094 532 A1**
(43) Date of publication of application: **25.04.2001**
(21) Application number: 00911428.1
(22) Date of filing: 28.03.2000
(51) Int. Cl.: H01M 4/58, H01M 10/40, H01M 4/04

(54) **METHOD FOR MANUFACTURING ACTIVE MATERIAL OF POSITIVE PLATE AND METHOD FOR MANUFACTURING NONAQUEOUS ELECTROLYTE SECONDARY CELL**

(30) Priority: 06.04.1999 JP 9940799; 28.09.1999 JP 27474699; 28.09.1999 JP 27474799
(71) Applicant: Sony Corporation, Tokyo 141-0001 (JP)
(72) Inventor: LI, Guohua, Sony Corp., Tokyo 141-0001 (JP); YAMADA, Atsuo, Sony Corp., Tokyo 141-0001 (JP); Azuma,Hidetoc/o SONY CORPORATION, Shinagawa-ku Tokyo 141-0001 (JP)
(74) Representative: MÜLLER & HOFFMANN Patentanwälte
(86) International application number: JP0001915
(87) International publication number: WO0060679

(57) **Abstract**

In a method for producing a positive electrode active material including a mixing step of mixing a plurality of substances to give a precursor and a sintering step of sintering and reacting said precursor obtained by said mixing step, in which these substances prove a starting material for synthesis of a compound represented by the general formula LiₓM_{y}PO₄ where x is such that 0 < x ≤ 2, y is such that 0.8 ≤ y ≤ 1.2 and M includes at lest one of 3d transition metals,, a reducing agent is added in the above mixing step to said precursor to render it possible to prepare a positive electrode active material capable of reversibly and satisfactorily doping/undoping lithium.

## Description

### Technical Field

This invention relates to a method for producing a positive electrode active material that is capable of reversibly doping/undoping lithium, and a method for producing a non-aqueous electrolyte secondary battery employing this positive electrode active material.

### Background Art

Recently, with the marked progress in a variety of electronic equipment, researches in a rechargeable secondary battery, as a battery that can be used conveniently and economically for prolonged time, are underway. Typical of the known secondary batteries are a lead battery, an alkali storage battery and a lithium secondary battery.

Of these secondary batteries, a lithium secondary battery has advantages as to high output and high energy density. The lithium secondary battery is made up at least of positive and negative electrodes, containing active materials capable of reversibly introducing and removing lithium ions, and a non-aqueous electrolyte.

Currently, LiCoCO₂ is widely exploited as a positive electrode active material of a lithium ion secondary battery having a potential of 4V with respect to the lithium potential. This LiCoCO₂ is of a high energy density and a high voltage and is an ideal positive electrode material in many respects. However, Co is localized in distribution and represents a rare resources, with the result that, if LiCoCO₂ is used as a positive electrode active material, the cost is raised, whilst stable supply is difficult.

Therefore, development of a electrode active material based on Ni, Mn or Fe, that is abundant in supply and inexpensive, is desirable. For example, LiNiO₂, based on Ni, has a large theoretical capacity and a high discharging potential. However, in a battery employing LiNiO₂, the LiNiO₂ crystal structure collapses with the charging/discharging cycles, so that the discharging capacity is lowered. On the other hand, LiNiO₂ suffers a drawback or poor thermal stability.

As an Mn-based electrode active material, there is proposed LiMn₂O₄ having a positive spinel structure and a spatial set Fd3m. This LiMn₂O₄ has a high potential of the order of 4V, with respect to the lithium potential, which is equivalent to that of LiCoCO_{2.} Moreover, the LiMn₂O₄ is a highly promising material since it is easy to synthesize and has a high battery capacity. However, the battery constructed using LiMn₂O₄ is deteriorated in battery capacity since Mn is dissolved in the electrolytic solution with the charging/discharging cycles so that it is insufficient in stability or cycle characteristics.

On the other hand, such a material having LiFeO₂ as a basic structure is being researched as an Fe-based electrode active material. Although LiFeO₂ has a structure similar to that of LiCoCO₂ or LiMn₂O₄, it is unstable in structure and difficult to synthesize.

On the other hand, a compound having an olivinic structure as a positive electrode active material of the lithium secondary battery, such as, for example, a compound represented by the general formula LiₓM_{y}PO₄, where x is such that 0 < x ≤ 2, y is such that 0.8 ≤ y ≤ 1.2 and M contains at least one of 3d transition metals (Fe, Mn, Co and Ni), is retained to be a promising material.

It is proposed in Japanese Laying-Open Patent H-9-171827 to use e.g., LiFePO₄, amongst the compounds represented by the general formula LiₓM_{y}PO₄, as a positive electrode of a lithium ion battery. This LiFePO₄ has a theoretical capacity as large as 170 mAh/g and contains one Li atom, that can be electro-chemically doped/undoped in an initial state, per Fe atom, and hence is a promising material as a positive electrode active material for the lithium ion battery.

Conventionally, this LiFePO₄ has been synthesized by sintering at a higher temperature of 800°C, under a reducing environment, using a bivalent iron salt, such as iron phosphate Fe₃(PO₄)₂ or iron acetate Fe(CH₃COO)₂, as an Fe source which proves a starting material for synthesis.

However, Fe²⁺ is sensitive to a trace amount of oxygen contained in a synthesizing atmosphere and is readily oxidized to Fe³⁺. The result is that trivalent iron compounds tend to co-exist in the produced Fe₃(PO₄)₂ to render it difficult to acquire single-phase LiFePO₄.

It is reported in the above Publication that an actual battery fabricated using the Fe₃(PO₄)₂ synthesized by the above-described synthetic method has an actual capacity only as low as approximately 60 mAh/g to 70 mAh/g. Although the actual capacity of the order of 120 mAh/g is subsequently reported in the Journal of the Electrochemical Society, 144,1188 (1997), it cannot be said that a sufficient capacity has been achieved, in consideration that the theoretical capacity is 170 mAh/g.

If is LiFePO₄ is compared to LiMn₂O₄, the former has a volumetric density of 3.6 g/cm³ and an average voltage of 3.4 V, whereas latter has a volumetric density of 4.2 g/cm³ and an average voltage of 3.9 V, with the capacity being 120 mAh/g. So, LiFePO₄ is lower than LiMn₂O₄ by approximately 10% in both the voltage and volumetric density. So, for the same capacity of 120 mAh/g, LiFePO₄ is lower than LiMn₂O₄ by not less than 10% and by not less than 20% in weight energy density and in volumetric energy density, respectively. Thus, in order to realize the energy density of LiFePO₄ which is of the level equivalent to or higher than LiMn₂O₄, the capacity of 140 mAh/g or higher is required. However, this high capacity has not been realized with LiFePO₄.

On the other hand, LiFePO₄ obtained by the conventional synthesizing method is lower in electrical conductivity than the positive electrode active material, such as LiMn₂O₄, and hence suffers the problem of low load characteristics and poor molding performance. So, in order to prepare an electrode using LiFePO₄ as the positive electrode active material, a large quantity of electrically conductive material, such as acetylene black, needs to be added, with the result that a non-aqueous electrolyte secondary battery employing LiFePO₄ as a positive electrode active material suffers a drawback that the energy density of the electrode is smaller, with the electrode molding performance being also lowered.

### Disclosure of the Invention

It is an object of the present invention to provide a method for producing a positive electrode active material in which mixing of an oxidized 3d transition metal into a compound represented by the general formula LiₓM_{y}PO₄ to realize a high capacity and a method for producing a high-capacity non-aqueous electrolyte secondary battery employing this positive electrode active material. It is a particular object of the present invention to provide a method for producing a positive electrode active material in which mixing of an oxidized 3d transition metal into a compound represented by the general formula LiₓM_{y}PO₄ and a method for producing a high-capacity non-aqueous electrolyte secondary battery by employing this positive electrode active material to realize a high capacity in case the compound represented by the general formula LiₓM_{y}PO₄ is LiFePO₄.

For accomplishing the above object, the present invention provides a method for producing a positive electrode active material including a mixing step of mixing a plurality of substances to give a precursor, the substances proving a starting material for synthesis of a compound represented by the general formula LiₓM_{y}PO₄ where x is such that 0 < x ≤ 2, y is such that 0.8 ≤ y ≤ 1.2 and M includes at lest one of 3d transition metals, and a sintering step of sintering and reacting the precursor obtained by the mixing step, wherein a reducing agent is added to the precursor in the mixing step.

In the method for producing the positive electrode active material according to the present invention, in which the reducing agent is added to the precursor in the mixing step, it is possible to prevent the 3d transition metal M in the starting material for synthesis from being oxidized by the residual oxygen to yield single-phase LiₓM_{y}PO₄ free of impurities.

The present invention also provides a method for producing a non-aqueous electrolyte secondary battery having a positive electrode containing a positive electrode active material capable of reversibly doping/undoping lithium, a negative electrode mounted facing the positive electrode and capable of reversibly doping/undoping lithium, and a non-aqueous electrolyte interposed between the positive electrode and the negative electrode, in which the positive electrode active material is produced by a method including a mixing step of mixing a plurality of substances, proving a starting material for synthesis of a compound represented by the general formula LiₓM_{y}PO₄ where x is such that 0 < x ≤ 2, y is such that 0.8 ≤ y ≤ 1.2 and M includes at lest one of 3d transition metals, to give a precursor, and a sintering step of sintering and reacting the precursor obtained by the mixing step, wherein a reducing agent is added to the precursor in the mixing step to prepare the positive electrode active material.

In the method for producing the non-aqueous electrolyte secondary battery according to the present invention, in which the reducing agent is added to the precursor in the mixing step in the preparation of the positive electrode active material, it is possible to prevent the 3d transition metal M in the starling material for synthesis from being oxidized by the residual oxygen to yield single-phase LiₓM_{y}PO₄ free of impurities.

The present invention also provides a method for producing a positive electrode active material including a mixing step of mixing a plurality of substances proving a starting material for synthesis of a compound represented by the general formula LiₓM_{y}PO₄ where x is such that 0 < x ≤ 2, y is such that 0.8 ≤ y ≤ 1.2 and M includes at lest one of 3d transition metals, to give a precursor, a de-aerating step of removing air contained in the precursor obtained in the mixing step, a sintering step of sintering and reacting the precursor obtained by the mixing step.

In the method for producing the positive electrode active material according to the present invention, in which air contained in the precursor in the de-aerating step is removed in the de-aerating step, it is possible to prevent the 3d transition metal M in the starting material for synthesis from being oxidized by the residual oxygen to yield single-phase LiₓM_{y}PO₄ free of impurities.

The present invention also provides a method for producing a non-aqueous electrolyte secondary battery having a positive electrode containing a positive electrode active material capable of reversibly doping/undoping lithium, a negative electrode mounted facing the positive electrode and capable of reversibly doping/undoping lithium, and a non-aqueous electrolyte interposed between the positive electrode and the negative electrode, in which the positive electrode active material is produced by a method including a mixing step of mixing a plurality of substances, proving a starting material for synthesis of a compound represented by the general formula LiₓM_{y}PO₄ where x is such that 0 < x ≤ 2, y is such that 0.8 ≤ y ≤ 1.2 and M includes at least one of 3d transition metals, to give a precursor, a de-aerating step of de-aerating air contained in the precursor obtained in the mixing step and a sintering step of sintering and reacting the precursor obtained in a state free of air by the de-aerating step.

In the method for producing a non-aqueous electrolyte secondary battery according to the present invention, in which, in preparing the positive electrode active material, any air contained in the precursor is removed in the deaerating process in the preparation of the positive electrode active material, it is possible to prevent the 3d transition metal M in the starting material for synthesis from being oxidized by the residual oxygen to yield single-phase LiₓM_{y}PO₄ free of impurities.

It is another object of the present invention to provide a method for producing a positive electrode active material superior in load characteristics and molding performance, and which is capable of realizing a high capacity, and a method for producing a non-aqueous electrolyte secondary battery which, through the use of ths positive electrode active material, has a high capacity approaching to the theoretical capacity of 170 mAh/g.

For accomplishing this object, the present invention provides a method for producing a positive electrode active material including a mixing step of mixing a plurality of substances to give a precursor, the substances proving a starting material for synthesis of a compound represented by the general formula LiₓM_{y}PO₄ where x is such that 0 < x ≤ 2, y is such that 0.8 ≤ y ≤ 1.2 and M includes at lest one of 3d transition metals, and a sintering step of sintering and reacting the precursor obtained by the mixing step, wherein an electrically conductive agent is added to the starting material for synthesis or to the precursor.

In the method for producing a positive electrode active material according to the present invention, in which an electrically conductive agent is added to the starting material for synthesis or to the precursor, the produced positive electrode active material exhibits superior load characteristics and electrode molding performance, to realize a high capacity.

The present invention also provides a method for producing a non-aqueous electrolyte secondary battery having a positive electrode active material capable of reversibly doping/undoping lithium, a negative electrode mounted facing the positive electrode and capable of reversibly doping/undoping lithium, and a non-aqueous electrolyte interposed between the positive electrode and the negative electrode, wherein the positive electrode active material is synthesized by a mixing step of mixing a plurality of substances, proving a starting material for synthesis of a compound represented by the general formula LiₓM_{y}PO₄ where x is such that 0 < x ≤ 2, y is such that 0.8 ≤ y ≤ 1.2 and M includes at lest one of 3d transition metals, to give a precursor, and a sintering step of sintering and reacting the precursor obtained by the mixing step, and wherein an electrically conductive agent is added to the starting material for synthesis or to the precursor to synthesize the positive electrode active material.

In the method for producing the non-aqueous electrolyte secondary battery according to the present invention, an electrically conductive agent is added to the starting material for synthesis or to the precursor. Since the positive electrode active material exhibits satisfactory load characteristics and electrode molding performance, the produced non-aqueous electrolyte secondary battery is of a high capacity.

### Brief Description of the Drawings

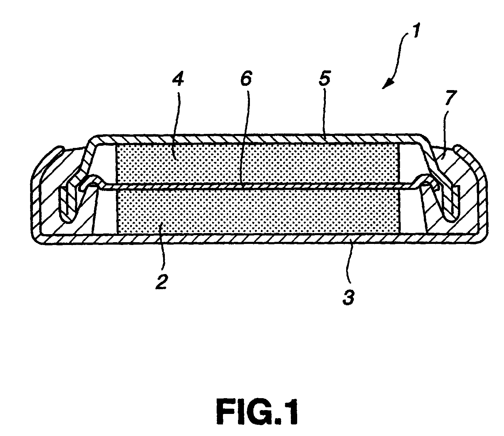

Fig.1 is a cross-sectional view showing an illustrative structure of a non-aqueous electrolyte secondary battery embodying the present invention.
Fig.2 is a graph showing a powder X-ray diffraction pattern of LiFePO₄ synthesized in Example 1.
Fig.3 is a graph showing a powder X-ray diffraction pattern of LiFePO₄ synthesized in Comparative Example 1.
Fig.4 is a graph showing charging/discharging characteristics of the battery of Example 1.
Fig.5 is a graph showing the relation between the number of cycles and the charging/discharging capacity of the battery of Example 1.
Fig.6 is a graph showing the charging/discharging characteristics of the battery of Comparative Example 1.
Fig.7 is a graph showing the relation between the number of cycles and the charging/discharging capacity of the battery of Comparative Example 1.
Fig.8 is a graph showing a powder X-ray diffraction pattern of LiFePO₄ synthesized in Example 3.
Fig.9 is a graph showing a powder X-ray diffraction pattern of LiFePO₄ synthesized in Comparative Example 2.
Fig.10 is a graph showing the charging/discharging characteristics of the battery of Example 3.
Fig.11 is a graph showing the relation between the number of cycles and the charging/discharging capacity of the battery of Example 3.
Fig.12 is a graph showing the relation between the sintering temperature in synthesizing LiFePO₄.
Fig.13 is a graph showing the charging/discharging characteristics of the battery of Comparative Example 2.
Fig.14 is a graph showing the relation between the number of cycles and the charging/discharging capacity of the battery of Comparative Example 2.
Fig.15 is a graph showing a powder X-ray diffraction pattern of an LiFePO₄ carbon complex material synthesized in Example 7.
Fig.16 is a graph showing a powder X-ray diffraction pattern of an LiFePO₄ carbon complex material synthesized in Example 8.
Fig.17 is a graph showing a powder X-ray diffraction pattern of an LiFe_{0.5}Mn_{0.5}PO₄ carbon complex material synthesized in Example 9.
Fig.18 is a graph showing a powder X-ray diffraction pattern of an LiFePO₄ carbon complex material synthesized in Comparative Example 7.
Fig.19 is a graph showing the charging/discharging characteristics of the battery of Example 7.
Fig.20 is a graph showing the relation between the number of cycles and the charging/discharging capacity of the battery of Example 7.
Fig.21 is a graph showing load characteristics of a battery of Example 8.
Fig.22 is a graph showing the charging/discharging characteristics of the battery of Example 9.
Fig.23 is a graph showing load characteristics of batteries of Example 7 and Comparative Example 1.
Fig.24 is a graph showing the charging/discharging characteristics of the battery of Comparative Example 4.
Fig.25 is a graph showing powder X-ray diffraction patterns of LiFePO₄ carbon complex material synthesized in Examples 10 to 12.
Fig.26 is a graph showing powder an X-ray diffraction pattern of LiFePO₄ synthesized in Comparative Example 5.
Fig.27 is a graph showing the charging/discharging characteristics of the battery of Example 11.
Fig.28 is a graph showing the charging/discharging characteristics of the battery of Example 12.
Fig.29 is a graph showing the charging/discharging characteristics of the battery of Comparative Example 4.
Fig.30 is a graph showing volumetric grain size distribution of the LiMnPO₄ carbon complex material of Examples 10 to 12 and LiMnPO₄ of Comparative Example 5.

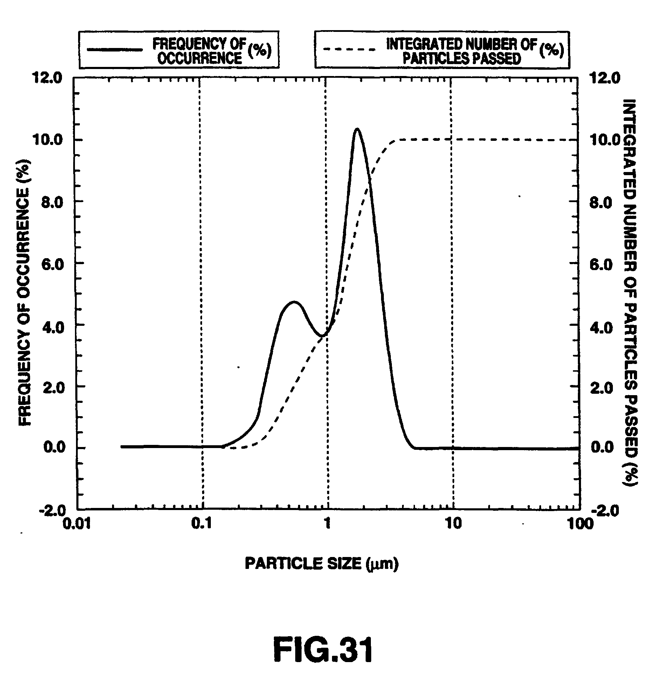

Fig.31 is a graph showing the volumetric grain size distribution of the LiMnPO₄ carbon complex material of Example 12 in integrated values of the passed portions.

### Best mode for Carrying out the Invention

The present invention is hereinafter explained in detail.

A non-aqueous electrolyte secondary battery, manufactured in accordance with the present invention, is a so-called lithium secondary battery, and includes, as basic constituent elements, a positive electrode, containing a positive electrode active material, a negative electrode and a non-aqueous electrolyte.

This positive electrode active material contains a compound having an olivinic structure and which is represented by the general formula LiₓM_{y}PO₄, where x is such that 0 < x ≤ 2, y is such that 0.8 ≤ y ≤ 1.2 and M contains at least one of 3d transition metals.

The compounds represented by the general formula LiₓM_{y}PO₄ may be enumerated by, for example, LiₓFe_{y}PO₄, LiₓMn_{y}PO₄, LiₓCo_{y}PO₄, LiₓNi_{y}PO₄, LiₓCu_{y}PO₄, Liₓ(Fe, Mn)_{y}PO₄, Liₓ(Fe, Co)_{y}PO₄, Liₓ(Fe, Ni)_{y}PO₄, Liₓ(Cu, Mn)_{y}PO₄, Liₓ(Cu, Co)_{y}PO₄ and Liₓ(Cu, Ni)_{y}PO₄, where the proportions of elements in parentheses () are arbitrary.

The compound represented by the general formula LiₓM_{y}PO₄ preferably contains particles with the particle size not larger than 10 µm. On the other hand, the specific surface area of the compound represented by the general formula _{LixMyPO4} is preferably not less than 0.5 m²/g.

In preparing a compound represented by the general formula LiₓM_{y}PO₄ as the aforementioned positive electrode active material, plural substances as starting material for synthesis of the compound represented by the general formula LiₓM_{y}PO₄ are mixed together to prepare a precursor by a mixing process. The precursor prepared in the mixing process is then sintered and reacted by a sintering process. A reducing agent is added to the precursor in the mixing process.

The method for preparing LiFePO₄, as the compound represented by the general formula LiₓM_{y}PO₄, is now explained.

In the mixing process, iron oxalate (FeC₂O₄), as a starting material for synthesis, ammonium hydrogen phosphate (NH₄H₂PO₄) and lithium carbonate (Li₂CO₃) are mixed together in a pre-set ratio and added to with e.g., iron powders (Fe) as a reducing agent. These substances are mixed sufficiently to give a precursor.

In the sintering process, this precursor is sintered at a pre-set temperature in an atmosphere of an inert gas, such as nitrogen. This synthesizes LiFePO₄.

If air is left in the precursor in synthesizing LiFePO₄, Fe²⁺ in iron oxalate, as a bivalent iron compound, tends to be oxidized with oxygen in air to Fe³⁺. As a result, the trivalent iron compound tends to be mixed as an impurity into the synthesized LiFePO₄.

According to the present invention, iron powders are added as a reducing agent in the mixing process. If Fe²⁺ in iron oxalate, as a bivalent iron compound, is oxidized to Fe³⁺ by oxygen in air contained in the precursor, the iron powders contained in the precursor reduces this Fe³⁺ to Fe^{2+.} Since this prohibits the trivalent iron compound from mixing into the synthesized LiFePO₄, it is possible to produce single-phase LiFePO₄.

The iron powder, added as a reducing agent, forms a part of the starting material for synthesis, and is synthesized into LiFePO₄ as an ultimate product. If the reducing agent becomes a part of the starting material for synthesis of LiFePO₄, there is no fear of mixing of impurities, so that single-phase LiFePO₄ may be produced. If the reducing agent is used as a part of LiFePO₄, the single-phase LiFePO₄ may be produced without the risk of mixing of impurities. Moreover, if the reducing agent is used as a part of LiFePO₄, there is no necessity of removing the reducing agent left over after the end of the reaction to render it possible to synthesize LiFePO₄ efficiently.

If iron powders are used as a part of the reducing agent or of the starting material for LiFePO₄ synthesis, these iron powders are desirably added to the precursor in an amount ranging from 1 wt% to 30 wt% based on the sum total of Fe in the iron starting material. If the amount of addition of the iron powders is less than this value, oxidation of Fe²⁺ cannot be prevented sufficiently. On the other hand, since the iron powders (Fe) are lower in reactivity than Fe²⁺ in iron oxalate (FeC₂O), the reaction of synthesis of LiFePO₄ does not proceed sufficiently if the amount of the iron powders exceeds 30 wt%. By setting the amount of addition of the iron powders in a range from 1 to 30 wt% based on the weight of Fe in the iron starting material, it is possible to prohibit oxidation of Fe²⁺ to produce the single-phase LiFePO₄ without obstructing the synthetic reaction.

As the reducing agent, oxalic acid, formic acid or hydrogen may be used in place of iron powders, insofar as no solid product is left over after the sintering process.

In the present technique, in which the reducing agent is added to the precursor as described above to suppress generation of trivalent iron compounds by trace oxygen, and the precursor is sintered in a nitrogen stream, it has become possible to synthesize LiFePO₄ at a temperature e.g., of 300°C which is appreciably lower than the conventional temperature of 800°C. Stated differently, LiFePO₄ can be synthesized over a broader temperature range than heretofore to increase the latitude of selection of the precursor sintering temperature, referred to below simply sintering temperature. If the sintering temperature is as high as 800°C, as in the conventional system, the energy consumption is correspondingly increased, whilst the load imposed on reaction apparatus etc is also increased.

The present inventors have directed attention to the relation between the precursor sintering temperature in synthesizing LiFePO₄ and the battery employing LiFePO₄ as the active material and investigated into an optimum sintering temperature for synthesizing LiFePO₄ in realization of a high capacity.

As a result, it has been found that the sintering temperature for sintering the LiFePO₄ precursor is desirably not lower than 350°C and not higher than 790°C. If the sintering temperature is lower than 350°C, there is a risk that the chemical reaction and crystallization do not proceed sufficiently, such that homogeneous LiFePO₄ cannot be produced. On the other hand, if the sintering temperature is higher than 790°C, there is a risk that crystallization proceeds excessively to obstruct lithium diffusion. So, by sintering the precursor at a temperature not lower than 350°C and not higher than 790°C, to synthesize LiFePO₄, homogeneous LiFePO₄ can be produced to realize a high capacity exceeding 120 mAh/g which is the capacity of LiFePO₄ produced by the conventional method.

It is more desirable that the sintering temperature be not lower than 450°C and not higher than 700°C. By sintering the precursor in a temperature range from 450°C to 700°C, it is possible to realize the high real capacity approaching to 170 mAh/g which is the theoretical capacity of LiFePO₄.

In the above-described manufacturing method for the positive electrode active material, in which a reducing agent is added to the precursor in synthesizing LiₓM_{y}PO₄, it is possible to prevent oxidation of M as a 3d transition metal, so that the single-phase LiₓM_{y}PO₄, can be produced without mixing of impurities. Moreover, LiₓM_{y}PO₄, can be produced at a sintering temperature lower than in the conventional system. So, with the present manufacturing method for the positive electrode active material, LiₓM_{y}PO₄ can be produced with which it is possible to realize a high capacity.

By using LiₓM_{y}PO₄, synthesized as described above, it is possible to produce a non-aqueous electrolyte secondary battery of high capacity and superior cyclic characteristics and lithium ion doping/undoping performance.

On the other hand, LiₓM_{y}PO₄ as a positive electrode active material can be produced as follows: First, plural materials as a starting material for synthesis of a compound represented by the general formula LiₓM_{y}PO₄ are mixed to give a precursor by a mixing process. Then, air contained in the precursor obtained by the mixing process is removed by way of a de-aerating process. The precursor freed of air by the de-aerating process is sintered and reacted by a sintering process to produce LiₓM_{y}PO₄.

Another method for synthesizing e.g., LiFePO₄ as a compound represented by the general formula LiₓM_{y}PO₄ is hereinafter explained.

In the mixing process, iron acetate (Fe(CH₃COO)₂), hydrogen ammonium phosphate (NH₄H₂PO₄) and lithium carbonate (Li₂CO₃) are mixed at a pre-set ratio to give the precursor.

In the de-aerating process, the precursor is homogenized sufficiently and de-aerated to remove air contained in the precursor. As the de-aerating processing, the atmosphere of the precursor is replaced by vacuum to introduce an inert gas. This removes air contained in the precursor. As another example of the de-aerating process, a solvent with a boiling point not higher than 250°C is made to co-exist with the precursor to vaporize off the solvent into the inert gas. This removes air contained in the precursor. The solvent boiling at 250°C or lower may be exemplified by, for example, water and ethanol.

In the sintering process, the precursor from the de-aerating processing is sintered at a pre-set temperature in an atmosphere of an inert gas, such as nitrogen. This synthesizes LiFePO₄.

If air is left in the precursor at the time of synthesis of LiFePO₄, Fe²⁺ in iron acetate as a bivalent iron compound may be oxidized by oxygen in air and thereby turned into Fe³⁺. So, the trivalent iron compound may be mixed as an impurity in the synthesized LiFePO₄.

According to the present invention, the air contained in the precursor is removed by the de-aerating process to prevent oxidation of Fe²⁺ contained in iron acetate. In this manner, no trivalent iron compound is mixed into synthesized LiFePO₄ to make it possible to produce single-phase LiFePO₄.

The sintering temperature, which is the temperature of sintering the precursor in synthesizing LiFePO₄, is desirably not lower than 350°C and not higher than 790°C, as in the case of the range of the sintering temperature.

In the above-described manufacturing method for the positive electrode active material, the air contained in the precursor is removed in synthesizing LiₓM_{y}PO₄, thus preventing oxidation of M as a 3d transition metal. This makes it possible to produce single-phase LiFePO₄ free of impurities. Moreover, LiₓM_{y}PO₄ can be synthesized at a lower sintering temperature. Thus, with the present manufacturing method for the positive electrode active material, LiₓM_{y}PO₄, realizing a high capacity, may be produced.

By employing LiₓM_{y}PO₄, synthesized as described above, as the positive electrode active material, it is possible to produce a non-aqueous electrolyte secondary battery of high capacity and superior cyclic characteristics and lithium ion doping/undoping performance.

Moreover, in synthesizing a compound sample composed of LiₓM_{y}PO₄ and an electrically conductive material, as a positive electrode active material containing LiₓM_{y}PO₄, plural materials as a starting material for synthesis of LiₓM_{y}PO₄ are mixed to give a precursor by a mixing process. The precursor obtained by the mixing process is then sintered and reacted by way of a sintering process. At this time, an electrically conductive material is added to the starting material for synthesis or to the precursor.

This electrically conductive material may be exemplified by carbon, silver or an electrically conductive high polymer material. The carbon black may be exemplified by, for example, graphite, acetylene black or the like carbon black material.

The electrically conductive material is desirably added in a range of 0.5 to 20 parts by weight to 100 parts by weight of LiₓM_{y}PO₄. If the amount of the electrically conductive material is less than 0.5 wt%, it is likely that no sufficient effect can be achieved. If conversely the amount of the electrically conductive material exceeds 20 wt%, the proportion of M as the main partner of the oxidation in the positive electrode active material is low such that the energy density of the non-aqueous electrolyte secondary battery is likely to be lowered.

Therefore, if, in the positive electrode active material, the electrically conductive material is added in a range of 0.5 to 20 parts by weight to 100 parts by weight of LiₓM_{y}PO₄, load characteristics and electrode molding performance are improved, such that the non-aqueous electrolyte secondary battery having ths compound sample as the positive electrode active material has a high capacity.

As a manufacturing method for a compound sample as the positive electrode active material, a manufacturing method for synthesizing the LiFePO₄ carbon compound material composed of LiFePO₄ and carbon as the LiₓM_{y}PO₄ and as the electrically conductive material is hereinafter explained.

In adding carbon to the precursor of the LiFePO₄, iron oxalate (FeC₂O₄), ammonium hydrogen phosphate (NH₄H₂PO₄) and lithium carbonate (Li₂CO₃) are sufficiently mixed in the mixing process to give a precursor, which precursor then is calcined at a lower temperature in an atmosphere of an inert gas, such as nitrogen. The calcined precursor and the carbon are mixed together and pulverized. In the sintering process, sintering is made at a preset temperature in an atmosphere of an inert gas, such as nitrogen, to produce a LiFePO₄ carbon compound material.

If carbon is added to the starting material for synthesis of LiFePO₄, carbon is added and mixed at the outset in the mixing process to a starting material for synthesis composed of iron oxalate (FeC₂O4), ammonium hydrogen phosphate (NH₄H₂PO₄) and lithium carbonate (Li₂CO₃) and the resulting mixture is calcined at a lower temperature in an atmosphere of an inert gas, such as nitrogen. In the sintering process, the calcined mixture is sintered at a pre-set temperature in the inert gas atmosphere, such as nitrogen, to produce an LiFePO₄ carbon compound material.

In the present technique, the starting material for synthesis is mixed thoroughly as described above to prepare the precursor. By thoroughly mixing the starting material for synthesis, the respective components of the starting material are mixed evenly to provide a precursor having an increased number of contact points. This precursor is sintered and synthesized in a nitrogen stream. This makes it possible to synthesize the compound sample by sintering the precursor at a temperature of e.g., 300°C which is appreciably lower than 800°C which is the sintering temperature for synthesizing LiFePO₄ by the conventional method.

Stated differently, the LiFePO₄ carbon compound material can be synthesized over a wide temperature range to provide for a wider temperature selection range for synthesis. This sintering temperature is preferably not less than 350°c and not higher than 790°C and more preferably not less than 450°c and not higher than 700°C.

If a compound sample composed of a compound of LiₓM_{y}PO₄, where M is Mn the redox potential of which is higher than that of Fe, and an electrically conductive material, for example, a compound material composed of LiFeₓMn₁₋ₓPO₄ and carbon, is to be synthesized as the positive electrode active material, iron oxalate (FeC₂O4), ammonium hydrogen phosphate (NH₄H₂PO₄) and lithium carbonate (Li₂CO₃), and manganese acetate tetrahydride (Mn(CH₃OO)₂·4H₂O) or manganese carbonate (MnCO₃) are mixed at a pre-set ratio. Otherwise, the technique of synthesizing the LiFePO₄ carbon compound material is used to prepare LiFeₓMn₁₋ₓPO₄.

If an LiₓMn_{y}PO₄ carbon compound material, composed of LiₓMn_{y}PO₄ and carbon where x is such that 0 < x ≤ 2 and y is such that 0.8 ≤ y ≤ 1.2, is to be synthesized as the positive electrode active material, the above-described technique of synthesizing the LiFePO₄ carbon compound material is followed except that manganese carbonate (MnCO₃), ammonium hydrogen phosphate (NH₄H₂PO₄) and lithium carbonate (Li₂CO₃) are mixed thoroughly at a pre-set ratio for use as a precursor, to prepare the LiₓMn_{y}PO₄ precursor.

The conventional olivinic LiₓMn_{y}PO₄ is low in electrically conductivity to render oxidation of Mn difficult. So, the present inventors added carbon to the starting material for synthesis of the olivinic LiₓMn_{y}PO₄ or its precursor to synthesize the LiₓMn_{y}PO₄ carbon compound material. Since oxidation of Mn newly occurs in this LiₓMn_{y}PO₄ carbon compound material, it is possible to use this material as the positive electrode active material.

In the above-described manufacturing method for the positive electrode active material, in which the compound sample composed of LiₓMn_{y}PO₄ and the electrically conductive material is to be synthesized, it is possible to synthesize a positive electrode active material having load characteristics and electrode molding performance more desirable than those of the positive electrode active material composed solely of LiM_{y}PO₄. Moreover, with the positive electrode active material, thus prepared, superior load characteristics and electrode molding performance are achieved, even if the amount of the electrically conductive material newly added at the time of preparing the electrodes is small, thus enabling the use of an electrically conductive agent having a large volumetric density, such as graphite.

So, the non-aqueous electrolyte secondary battery, containing this compound sample as the positive electrode active material, is of high capacity and superior cyclic characteristics, because migration of electrons occurs smoothly in the electrodes. On the other hand, there is no necessity of adding a new electrically conductive agent to the positive electrode mixture of the non-aqueous electrolyte secondary battery, thus increasing the energy density.

If, in the non-aqueous electrolyte secondary battery employing the positive electrode active material, synthesized as described above, the electrolyte used in a non-aqueous electrolyte secondary battery 1 is liquid, the non-aqueous electrolyte secondary battery 1 includes a positive electrode 2, a positive electrode can 3, accommodating the positive electrode 2, a negative electrode 4, a negative electrode can 5, accommodating the negative electrode 4, a separator 6 mounted between the positive electrode 2 and the negative electrode 4 and an insulating gasket 7. The non-aqueous electrolyte is charged in the positive electrode 2 and in the negative electrode can 5.

The positive electrode 2 is comprised of a positive electrode collector of, for example, an aluminum foil, and a layer of a positive electrode active material containing the positive electrode active material, synthesized as described above. As a binder contained in the layer of the positive electrode active material, it is possible to use a known resin material routinely used as a binder for the layer of the positive electrode active material for this type of the non-aqueous electrolyte secondary battery.

The positive electrode can 3, accommodating the positive electrode 2, serves as an external positive electrode for the non-aqueous electrolyte secondary battery 1.

The negative electrode 4 is formed e.g., by a foil of metal lithium operating as a negative electrode active material. If a material capable of doping/undoping lithium is used as the negative electrode active material, the negative electrode 4 is the layer of the negative electrode active material containing the negative electrode active material and the negative electrode collector on which is formed the layer of the negative electrode active material. As the negative electrode collector, a nickel foil, for example, is used. As the negative electrode active material capable of doping/undoping lithium, metal lithium, lithium alloys, an electrically conductive high polymer material doped with lithium, and a laminated compound, such as a carbon material or a metal oxide, may be used. As a binder contained in the layer of the negative electrode active material, any suitable known binders routinely used as a binder for the layer of the negative electrode active material for this sort of the non-aqueous electrolyte secondary battery may be used.

The negative electrode can 5, accommodating the negative electrode 4, serves as an external positive electrode for the non-aqueous electrolyte secondary battery 1.

The separator 6, used for separating the positive electrode and the negative electrode from each other, may be formed of any suitable known materials routinely used as a separator for the layer of the negative electrode active material for this sort of the non-aqueous electrolyte secondary battery. For example, a film of a high molecular material, such as polypropylene, is used. From the relation between conductivity of lithium ions and the energy density, it is necessary that the thickness of the separator 6 be as thin as possible. Specifically, the thickness of the separator 6 of, for example, not more than 50 µm, is desirable.

The insulating gasket 7 is built into and unified with the negative electrode can 5 and serves for preventing leakage of the non-aqueous electrolytic solution charged into the positive electrode can 3 and the negative electrode can 5.

As the non-aqueous electrolytic solution, a solution obtained on dissolving the electrolyte in a non-protonic non-aqueous solvent is used.

The non-aqueous solvent may be exemplified by, for example, propylene carbonate, ethylene carbonate, butylene carbonate, vinylene carbonate, γ-butyrolactone, sulforane, 1,2-dimethoxyethane, 1,2-diethoxyethane, 2-methyltetrahydrofuran, 3- methyl 1,3- dioxorane, methyl propionate, methyl lactate, dimethyl carbonate, diethyl carbonate and dipropyl carbonate. Especially, from voltage stability, cyclic carbonates, such as propylene carbonate or vinylene carbonate, or chain carbonates, such as dimethyl carbonate, diethyl carbonate or dipropyl carbonate, are preferably used. As this non-aqueous solvent, only one type non-aqueous solvent or a mixture of two or more non-aqueous solvents may be used.

As the electrolyte, dissolved in the non-aqueous solvent, lithium salts, such as LiPF₆, LiClO₄, LiAsF₆, LiBF₄, LiCF₃SO₃ or LiN(CF₃SO₂)₂, may be used. Of these lithium salts, LiPF₆ or LiBF₄ may preferably be used.

The non-aqueous electrolyte secondary battery 1 is manufactured, e.g., by the following method:

For preparing the positive electrode 2, the positive electrode active material and the binder are dispersed in a solvent to prepare a slurried positive electrode mixture. The so-prepared positive electrode mixture then is evenly coated on a current collector and dried in situ to prepare a layer of the positive electrode active material to complete the positive electrode 2. For preparing the negative electrode 4, the negative electrode active material and the binder are dispersed in a solvent to prepare a slurried negative electrode mixture. The so-prepared negative electrode mixture then is evenly coated on a current collector and dried in situ to prepare a layer of the negative electrode active material to complete the negative electrode 4. The non-aqueous electrolytic solution is prepared by dissolving an electrolyte salt in a non-aqueous solvent.

The positive electrode 2 and the negative electrode 4 are accommodated in the positive electrode can 3 and in the negative electrode can 5. The separator 6 formed e.g., by a porous polypropylene film is arranged between the positive electrode 2 and the negative electrode 4. The non-aqueous electrolytic solution is charged into the positive electrode can 3 and the negative electrode can 5. The electrode cans 3, 5 are caulked fixedly through the insulating gasket 7 to complete the non-aqueous electrolyte secondary battery 1.

In the above-described embodiment, the non-aqueous electrolyte secondary battery 1 employing the non-aqueous electrolytic solution is used, as an example, as the non-aqueous electrolyte secondary battery. The present invention is, however, not limited to this and may be applied to the use as the non-aqueous electrolyte of a solid electrolyte or a gelated solid electrolyte containing a swelling solvent. The present invention may also be applied to a variety of shapes of the non-aqueous electrolyte secondary batteries, such as a cylindrical shape, a square shape, a coin or a button shape, or to a variety of sizes of the non-aqueous electrolyte secondary battery, such as a thin type or large-sized batteries.

In the above-described embodiment, the manufacturing method for an positive electrode active material by synthesizing LiFePO₄, an LiFePO₄ carbon compound, a compound sample composed of LiFeₓMn₁₋ₓPO₄ and carbon or a LiₓMn_{y}PO₄ carbon compound material composed of LiₓMn_{y}PO₄ and carbon, has been explained. However, it is only necessary that the positive electrode active material be based on LiₓM_{y}PO₄ as the basic composition, such that any element may be added to or used as a substituent in LiₓM_{y}PO₄ as long as the reaction and crystallization proceed at a sintering temperature not lower than 350°C and not higher than 790°C, as described above. LiₓM_{y}PO₄ may also suffer from defects.

Also, in the above-described embodying the present invention of the present invention, a solid-phase reaction of mixing and sintering a powdered material as a starting material for synthesis of the compound represented by the general formula LiₓM_{y}PO₄ in the preparation of the positive electrode active material is explained as an example. The present invention, however, is not limited to this and may be applied to the use of various other methods for chemical synthesis than the solid-phase reaction.

Meanwhile, a starting material of high reactivity is preferably used as the starting material for synthesis of LiₓM_{y}PO₄. For example, as the starting material for synthesis of LiFePO₄, various starting materials, such as lithium hydroxide, lithium nitrate, lithium acetate, lithium phosphate, iron (II) phosphate or iron (II) oxide may be used in addition to the above-mentioned compounds.

In the following, specified Examples and Comparative Examples, embodying the present invention, are explained based on the experimental results.

### 〈Experiment 1〉

In an experiment 1, in synthesizing LiFePO₄ as the positive electrode active material, an Example in which iron powders were added as a reducing agent to the precursor and a Comparative Example in which iron powders were not added to the precursor, were synthesized. Plural non-aqueous electrolyte secondary batteries, employing these positive electrode active materials, were prepared, and evaluation was made of difference in characteristics of the respective positive electrode active materials and the non-aqueous electrolyte secondary batteries.

### Example 1

First, LiFePO₄ was synthesized. For synthesizing LiFePO₄, ammonium dihydrogen phosphate (NH₄H₂PO₄) as a starting material of a coarser crystallite size was sufficiently pulverized at the outset. Then, iron powders (Fe), iron oxalate dihydride (FeC₂O₄·2HO), ammonium dihydrogen phosphate (NH₄H₂PO₄) and lithium carbonate (Li₂CO₃) were mixed together to a molar ratio of 0.4: 1.6: 2: 1 for thirty minutes in a mortar to give a precursor. This precursor then was calcined in a nitrogen atmosphere at 300°C for 12 hours. The so-calcined precursor was sintered in the nitrogen atmosphere at 600°C for 24 hours to synthesize LiFePO₄.

The so-prepared LiFePO₄ was used as the positive electrode active material to prepare a battery. 70 wt% of dried LiFePO₄, as the positive electrode active material, 25 wt% of acetylene black, as an electrically conductive material, and 5 wt% of polyvinylidene fluoride, as a binder, were evenly mixed into dimethyl formamide as a solvent to prepare a paste-like positive electrode mixture. Meanwhile, #1300 manufactured by Aldrich Inc. was used as the polyvinylidene fluoride. This positive electrode mixture was applied to an aluminum mesh, as a current collector, and dried in situ in a dry argon atmosphere at 100°C for one hour to form a layer of the positive electrode active material. The aluminum mesh, on which the layer of the positive electrode active material was formed, was punched to a disc 15.5 mm in diameter to form a pellet-like positive electrode. Meanwhile, this positive electrode carries 60 mg of the active material.

A metal lithium foil was punched to substantially the same shape as the positive electrode and used as a negative electrode. In a mixed solvent of equal parts in volume of propylene carbonate and dimethyl carbonate was dissolved LiPF₆ at a concentration of 1 mol/l to prepare a non-aqueous electrolytic solution.

The positive electrode, prepared as described above, was accommodated in the positive electrode can, whilst the negative electrode was accommodated in the negative electrode can and the separator was arranged between the positive electrode and the negative electrode. The non-aqueous electrolytic solution was charged into the positive electrode can and the negative electrode can. The electrode cans 3, 5 are caulked fixedly through the insulating gasket 7 to complete a 2025 type coin-shaped test cell.

### Example 2

LiFePO₄ was prepared in the same way as in Example 1, except using iron acetate in place of iron oxalate as the starting material for synthesis and mixing iron powders (Fe), iron acetate (FeCH₃COO)₂), ammonium dihydrogen phosphate (NH₄H₂PO₄) and lithium carbonate (Li₂CO₃) to a molar ratio of 0.2: 1.8: 2: 1. The so-produced LiFePO₄ was used as the positive electrode active material to prepare a test cell.

### Comparative Example 1

LiFePO₄ was prepared in the same way as in Example 1, except adding no reducing agent and mixing iron oxalate dihydride (FeC₂O4·2H₂O), ammonium dihydrogen phosphate (NH₄H₂PO₄) and lithium carbonate (Li₂CO₃) to a molar ratio of 2: 2: 1. The so-produced LiFePO₄ was used as the positive electrode active material to prepare a test cell.

Then, measurement was made of the powder X-ray diffraction pattern of the LiFePO₄ prepared by the above-described method. The measurement conditions of the powder X-ray diffraction were as follows:
apparatus used: RIGAKU RINT 2500 rotary counter pair negative electrode
goniometer: vertical type standard, radius 185 mm
counter monochromator: used
filter: not used
slit width
   divergent slit (DS) = 1°
   receiving slit (RS) = 1°
   scattering slit (SS) = 0.15 mm
counter device: scintillation counter
measurement method: reflection method, continuous scan
scanning range: 2θ = 10° to 80°
scanning speed: 4°/minute

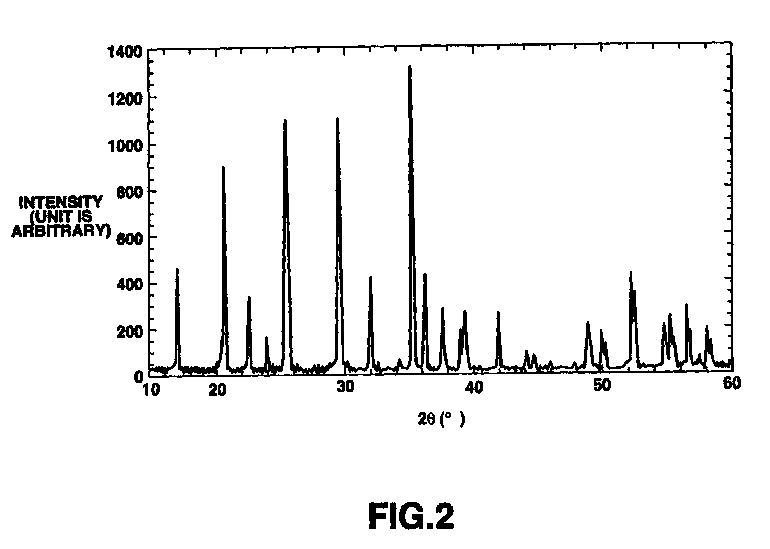

The powder X-ray diffraction pattern of LiFePO₄, synthesized in Example 1, is shown in Fig.2, from which it is seen that a single-phase LiFePO₄ has been obtained since the presence of the impurity other than LiFePO₄ is not confirmed in the product.

The precursor was sintered at plural temperature points in a range from 320°C to 850°C to prepare LiFePO₄ in a similar manner. It was found that there was no impurity in LiFePO₄ synthesized in the range from 320°C to 850°C so that a single-phase LiFePO₄ has been obtained.

On the other hand, the presence of the impurity other than LiFePO₄ was not noticed in the product synthesized in Example 2 from the powder X-ray diffraction pattern of LiFePO₄ synthesized in Example 2, thus testifying to the generation of the single-phase LiFePO₄.

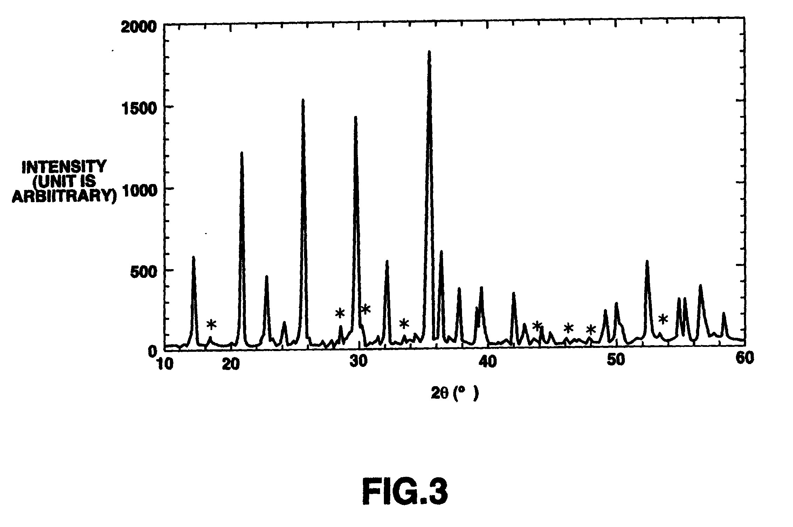

The powder X-ray diffraction pattern of LiFePO₄, synthesized in Comparative Example 2, is shown in Fig.3, from which it is seen that impurities other than LiFePO₄ are present in the product such that no single-phase LiFePO₄ has been yielded. Meanwhile, in Fig.3, a peak attributable to the impurity is marked with an asterisk *. This impurity is presumably a trivalent iron compound, such as Fe₂O₃.

The test cells, prepared as described above, were subjected to the charging/discharging test, in which each test cell was charged by constant current charging and, when the battery voltage reached 4.5V, the charging system was switched from the constant current charging to constant voltage charging, and charging was carried out as the voltage of 4.5 V was kept. The charging was stopped when the current fell below 0.01 mA/cm². The discharging then was carried out and stopped at a time point when the battery voltage was lowered to 2.0 V. Meanwhile, charging/discharging was carried out at ambient temperature (23°C), with the current density at this time being 0.12 mA/cm².

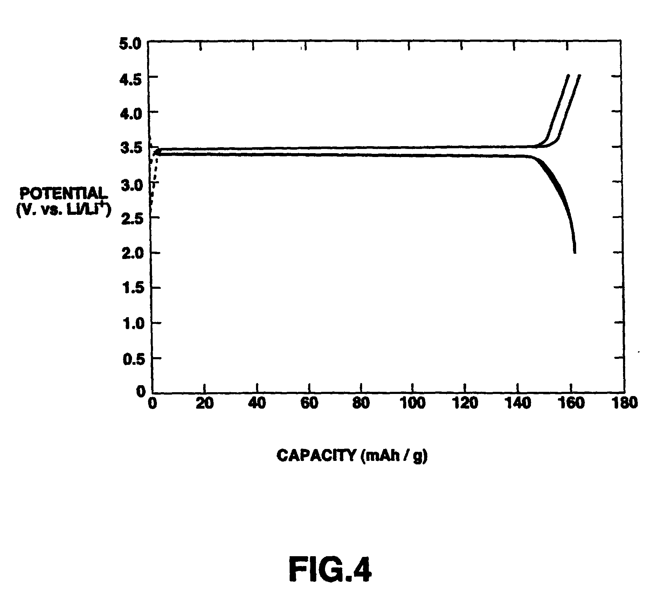

The charging/discharging characteristics of the battery of Example 1 are shown in Fig.4, from which it is seen that the battery of Example 1 showed a flat potential in the vicinity of 3.4 V, thus indicating that the high reversible charging/discharging capacity of 163 mAh/g, which is close to the theoretical capacity of 170 mAh/g, is being produced.

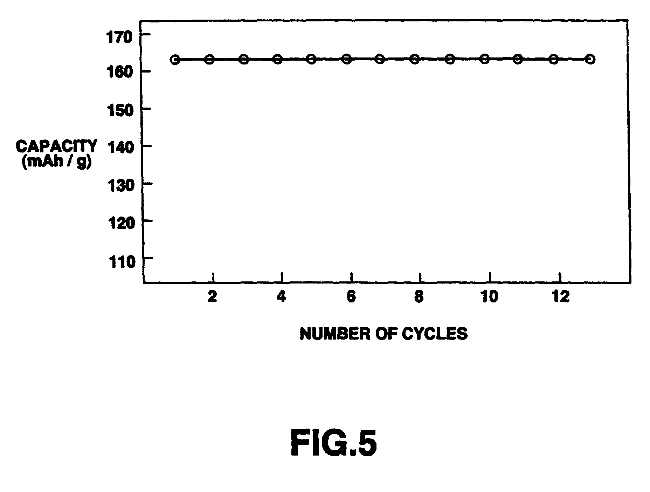

The relation between the number of cycles and the charging/discharging capacity of the battery of Example 1 is shown in Fig.5, from which it is seen that the battery of the Example 1 undergoes cyclic deterioration as low as 0.1%/cycle, thus demonstrating stable battery characteristics.

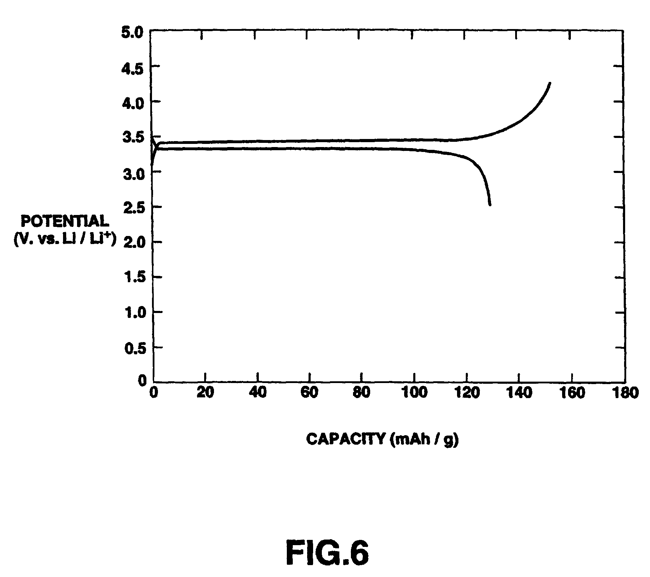

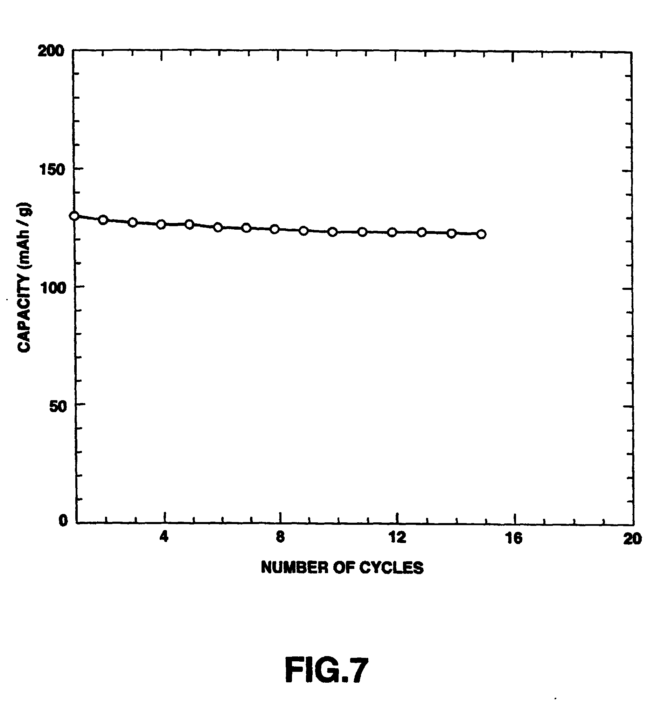

The charging/discharging characteristics of the battery of Comparative Example 1 are shown in Fig.6. The relation between the number of cycles and the charging/discharging capacity of the battery of Comparative Example 1 is shown in Fig.7. From Figs.6 and 7, it may be seen that the battery of Comparative Example 1 is satisfactory in cyclic characteristics, however, the battery of Comparative Example 1 suffers from significant capacity loss at an initial stage, with the charging/discharging efficiency being low.

Thus, it may be seen that, by adding a reducing agent to the precursor in synthesizing LiFePO₄, Fe²⁺ in the precursor may be prevented from being oxidized by the residual oxygen to become Fe³⁺ to give a single-phase LiFePO₄. The battery employing this single-phase LiFePO₄ as the positive electrode active material is superior in charging/discharging characteristics and in cyclic characteristics.

### 〈Experiment 2〉

In this experiment 2, in synthesizing LiFePO₄ as the positive electrode active material, an Example in which a precursor was de-aerated, and a Comparative Example in which iron powders were not added, were synthesized, and plural non-aqueous electrolyte secondary batteries employing these positive electrode active materials were prepared. Of the respective positive electrode active materials and the non-aqueous electrolyte secondary batteries, the difference in characteristics was evaluated.

### Example 3

First, LiFePO₄ was synthesized. For synthesizing LiFePO₄, ammonium dihydrogen phosphate (NH₄H₂PO₄) as a starting material of a coarser crystallite size was sufficiently pulverized at the outset. Then, iron acetate (FeCH₃COO)₂), ammonium dihydrogen phosphate (NH₄H₂PO₄) and lithium carbonate (Li₂CO₃) were mixed together to a molar ratio of 2: 2: 1 for thirty minutes in a mortar to give a precursor.

This precursor then was charged into an electrical oven and, after the atmosphere was replaced by vacuum, a nitrogen gas was introduced into the oven. This precursor was calcined in a nitrogen atmosphere at 300°C for 12 hours, after which the precursor was sintered in the nitrogen atmosphere at 600°C for 24 hours to synthesize LiFePO₄.

The so-prepared LiFePO₄ was used as a positive electrode active material o produce a test cell in the same way as in Example 1.

### Example 4

First, LiFePO₄ was synthesized. For synthesizing LiFePO₄, ammonium dihydrogen phosphate (NH₄H₂PO₄) as a starting material of a coarser crystallite size was sufficiently pulverized at the outset Then, iron acetate (FeCH₃COO)₂), ammonium dihydrogen phosphate (NH₄H₂PO₄) and lithium carbonate (Li₂CO₃) were mixed together to a molar ratio of 2: 2: 1 for thirty minutes in a mortar to give a precursor. The resulting mixture was further mixed for 48 hours, using zirconia balls 2mm in diameter, with water as a solvent.

This mixture then was dried to a clayey state, afer which the mixture was sintered in a nitrogen stream in an electrical oven at 120°C to remove residual water to produce a precursor with high homogeneity. This precursor then was calcined at 300°C for 12 hours in a nitrogen atmosphere and further sintered in the nitrogen atmosphere at 600°C for 24 hours to synthesize LiFePO₄.

Using the so-prepared LiFePO₄ as the positive electrode active material, a test cell was prepared as in Example 1.

### Example 5

First, LiFePO₄ was synthesized. For synthesizing LiFePO₄, ammonium dihydrogen phosphate (NH₄H₂PO₄) as a starting material of a coarser crystallite size was sufficiently pulverized at the outset. Then, iron acetate (FeCH₃COO)₂), ammonium dihydrogen phosphate (NH₄H₂PO₄) and lithium carbonate (Li₂CO₃) were mixed together to a molar ratio of 2: 2: 1 for thirty minutes in a mortar to give a precursor. The resulting mixture was further mixed for 48 hours, using zirconia balls 2 mm in diameter, with ethanol as a solvent

This mixture then was dried to a clayey state, after which the mixture was sintered in a nitrogen stream in an electrical oven at 120°C to remove residual ethanol to produce a precursor with extremely high homogeneity. This precursor then was calcined at 300°C for 12 hours in a nitrogen atmosphere and further sintered in the nitrogen atmosphere at 600°C for 24 hours to synthesize LiFePO₄.

Using the so-prepared LiFePO₄ as the positive electrode active material, a test cell was prepared as in Example 1.

### Example 6

First, LiFePO₄ was synthesized. For synthesizing LiFePO₄, ammonium dihydrogen phosphate (NH₄H₂PO₄) as a starting material of a coarser crystallite size was sufficiently pulverized at the outset Then, iron acetate (FeCH₃COO)₂), ammonium dihydrogen phosphate (NH₄H₂PO₄) and lithium carbonate (Li₂CO₃) were mixed together to a molar ratio of 2: 2: 1 for thirty minutes in a mortar to give a precursor. The resulting mixture was further mixed for 48 hours, using zirconia balls 2 mm in diameter, with acetone as a solvent.

This mixture then was dried to a clayey state, after which the mixture was sintered in a nitrogen stream in an electrical oven at 120°C to remove residual acetone to produce a precursor with high homogeneity. This precursor then was calcined at 300°C for 12 hours in a nitrogen atmosphere and further sintered in the nitrogen atmosphere at 600°C for 24 hours to synthesize LiFePO₄.

Using the so-prepared LiFePO₄ as the positive electrode active material, a test cell was prepared as in Example 1.

### Comparative Example 2

First, LiFePO₄ was synthesized. For synthesizing LiFePO₄, iron acetate (FeCH₃COO)₂), ammonium dihydrogen phosphate (NH₄H₂PO₄) and lithium carbonate (Li₂CO₃) were mixed together to a molar ratio of 2: 2: 1 for thirty minutes in a mortar to give a precursor. The resulting precursor was calcined at 300°C for 12 hours in a nitrogen atmosphere and further sintered in the nitrogen atmosphere at 600°C for 24 hours to synthesize LiFePO₄. Using the so-prepared LiFePO₄ as the positive electrode active material, a test cell was prepared as in Example 1.

Of the LiFePO₄, synthesized as described above, measurement was made of the powder X-ray diffraction pattern under the above-mentioned measurement conditions.

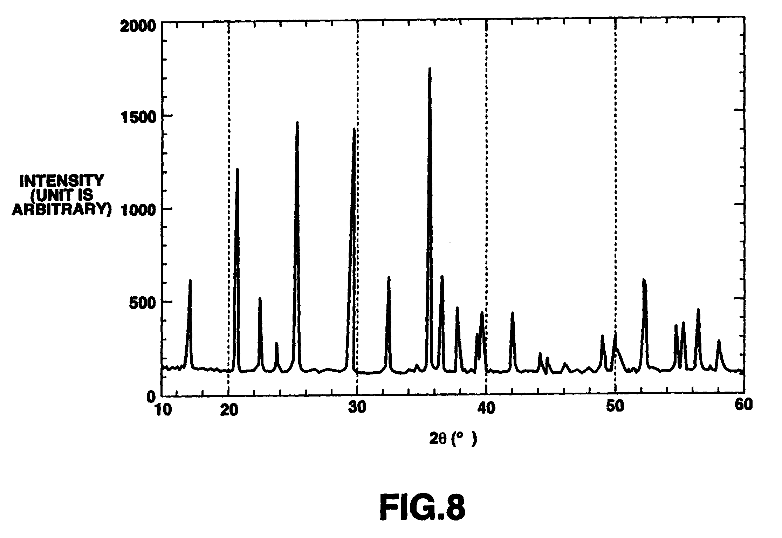

Fig.8 shows the powder X-ray diffraction pattern of LiFePO₄, synthesized in Example 3. It is seen from Fig.8 that no impurity other than LiFePO₄ was confirmed to exist in the product so that the single-phase LiFePO₄ has been produced.

Also, from the powder X-ray diffraction pattern of LiFePO₄, synthesized in Examples 4 to 6, no impurity other than LiFePO₄ was confirmed to exist in the product, so that, in these Examples, the single-phase LiFePO₄ has been produced.

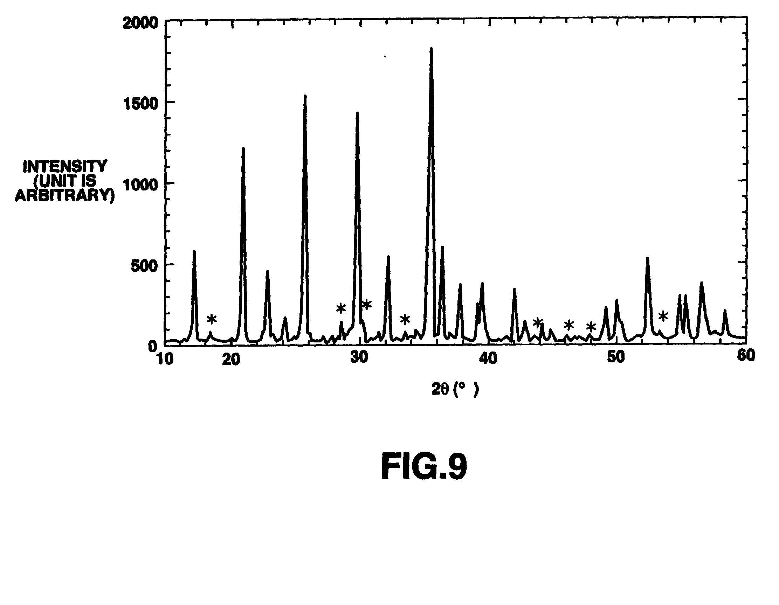

The powder X-ray diffraction pattern of LiFePO₄, synthesized in Comparative Example 2, is shown in Fig.9, from which it is seen that impurities other than LiFePO₄ are present in the product such that no single-phase LiFePO₄ has been yielded. Meanwhile, in Fig.3, the peak attributable to the impurity is marked with an asterisk *. This impurity is presumably a trivalent iron compound, such as Fe₂O₃.

The test cells, prepared as described above, were subjected to the charging/discharging test, using the same method as stated in Experiment 1.

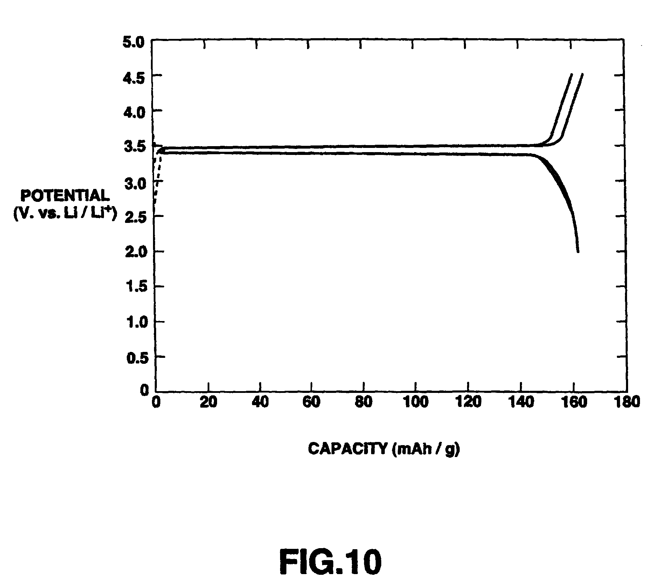

Of the battery of Example 3, the charging/discharging characteristics for the first to third cycles are shown in Fig.10, from which it is seen that the battery of Example 3 showed a flat potential in the vicinity of 3.4 V, thus indicating that the battery has a high reversible charging/discharging capacity of 163 mAh/g, which is close to the theoretical capacity of 170 mAh/g.

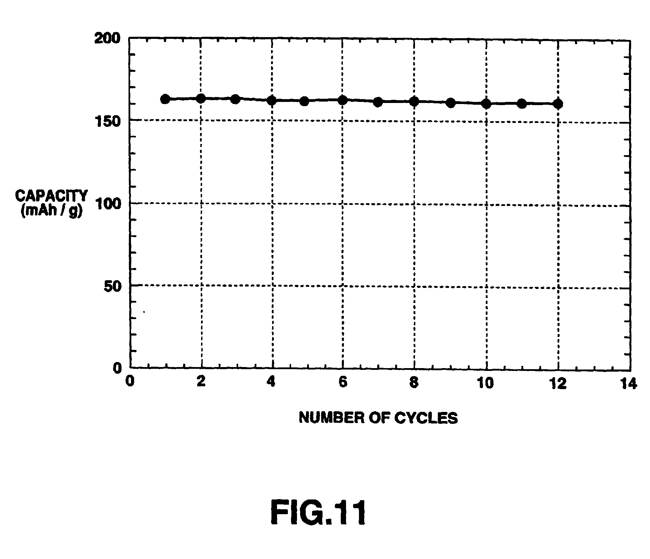

The relation between the number of cycles and the charging/discharging capacity of the battery of Example 3 is shown in Fig.11, from which it is seen that the battery of the Example 3 undergoes cyclic deterioration as low as 0.1%/cycle, thus demonstrating stable battery characteristics.

Similarly to the battery of Example 3, the batteries of Examples 4 to 6 were confirmed to exhibit a high charging/discharging capacity and superior cyclic characteristics.

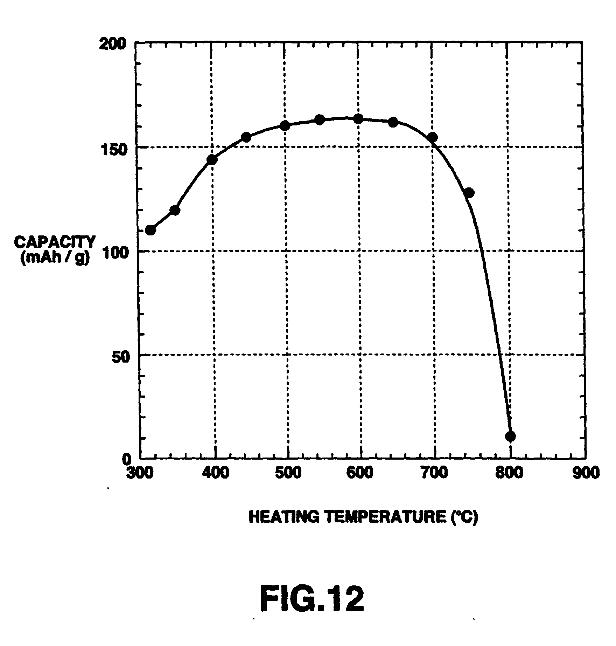

Test cells were prepared in the same way as in Example 6 except changing the sintering temperature of the precursor to check into the charging/discharging capacity of the cells. The relation between the sintering temperature of the precursor and the charging/discharging capacity of the cells is shown in Fig.12, from which it is seen that, by synthesizing LiFePO₄ at a temperature not lower than 350C and not higher than 790°C, a high capacity exceeding 120 mAh/g of a conventional non-aqueous electrolyte secondary battery can be achieved.

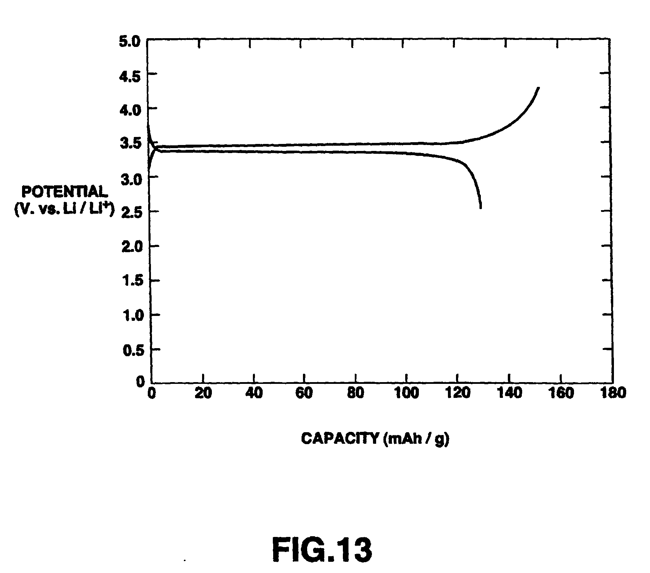

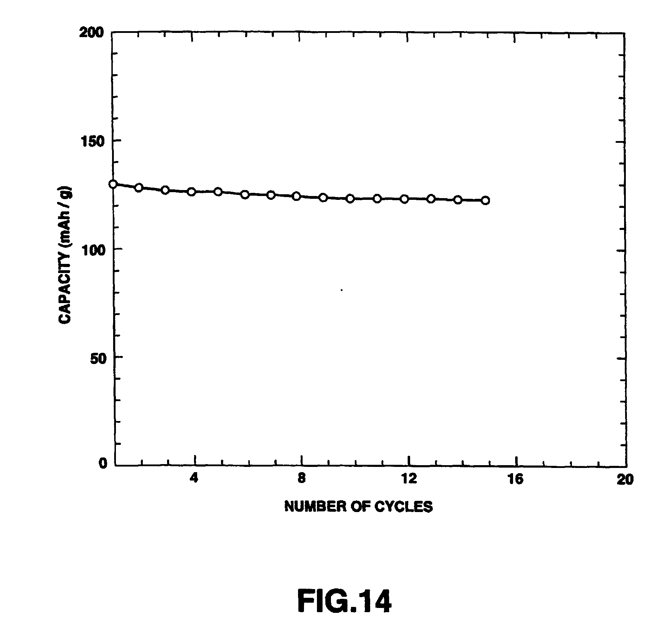

The charging/discharging characteristics of the battery of Comparative Example 2 are shown in Fig.13. The relation between the number of cycles and the charging/discharging capacity of the battery of Comparative Example 2 is shown in Fig.14. It is seen from Figs.13 and 14 that the battery of Comparative Example 2 is satisfactory in the cyclic characteristics, however, it is high in capacity loss in an initial state and low in the charging/discharging efficiency.

Thus, it is seen that, by de-aerating the precursor in synthesizing LiFePO₄, it is possible to prevent Fe²⁺ in the precursor from being oxidized with residual oxygen to Fe³⁺ to yield single-phase LiFePO₄. It is also seen that the battery employing this single-phase LiFePO₄ as the positive electrode active material is superior in charging/discharging characteristics and cyclic characteristics.

### 〈Experiment 3-1〉

In an experiment 3-1, a variety of positive electrode active materials, containing LiFePO₄ or LiFe_{0.5}Mn_{0.5}PO₄, were synthesized, and non-aqueous electrolyte secondary batteries, employing these positive electrode active materials, were prepared, and evaluation was made of the difference in characteristics of these non-aqueous electrolyte secondary batteries.

### Example 7

An LiFePO₄ carbon compound material composed of LiFePO₄ as a positive electrode active material and carbon as an electrically conductive material was synthesized and, using this compound material, non-aqueous electrolyte secondary batteries were prepared.

First, iron oxalate dihydride (FeC₂O4·2H₂O), ammonium dihydrogen phosphate (NH₄H₂PO₄) and lithium carbonate (Li₂CO₃) were mixed to a molar ratio of 2: 2: 1 and thoroughly pulverized and mixed by a ball mill. The resulting mixture was calcined in a nitrogen atmosphere at 300°C for two hours to yield a precursor. This precursor and graphite were mixed to a weight ratio of 90:10 and pulverized sufficiently by a ball mill for mixing. The precursor then was sintered in a nitrogen atmosphere at 550°C for 24 hours to synthesize an LiFePO₄ carbon compound material.

A battery was prepared, using the LiFePO₄ carbon compound material, obtained as described above, as a positive electrode active material first, 97 wt% of the dried LiFePO₄ carbon compound material and 3 wt% of polyvinylidene fluoride, as a binder, were evenly mixed into N-methyl pyrrolidone as a solvent to prepare a paste-like positive electrode mixture. Meanwhile, #1300 manufactured by Aldrich Inc. was used as the polyvinylidene fluoride. This positive electrode mixture was applied to an aluminum mesh, as a current collector, and dried in situ in a dry argon atmosphere at 100°C for one hour to form a layer of the positive electrode active material. The aluminum mesh, on which the layer of the positive electrode active material was formed, was punched to a disc 15.5 mm in diameter to form a pellet-like positive electrode. Meanwhile, this positive electrode carries 60 mg of the active material. A metal lithium foil was punched to substantially the same shape as the positive electrode and used as a negative electrode. In a mixed solvent of equal parts in volume of propylene carbonate and dimethyl carbonate was dissolved LiPF₆ at a concentration of 1 mol/l to prepare a non-aqueous electrolytic solution.

The positive electrode, prepared as described above, was accommodated in the positive electrode can, whilst the negative electrode was accommodated in the negative electrode can and a separator was arranged between the positive electrode and the negative electrode. The non-aqueous electrolytic solution was charged into the positive electrode can and the negative electrode can. The electrode cans 3, 5 are caulked fixedly through the insulating gasket 7 to complete a 2025 type coin-shaped non-aqueous electrolyte secondary battery as a test cell.

### Example 8

An LiFePO₄ precursor was prepared in the same way as in Example 7. A LiFePO₄ carbon compound material was prepared in the same way as in Example 7 except mixing this precursor, graphite and acetylene black together to a weight ratio of 90: 5: 5 and sufficiently pulverizing the mixture by a ball mill for mixing.

Using the LiFePO₄ carbon compound material, obtained as described above, as a positive electrode active material, a test cell was prepared in the same way as in Example 7.

### Example 9

A LiFe_{0.5}Mn_{0.5}PO₄ carbon compound material was prepared as the positive electrode active material and a test cell was prepared using the LiFe_{0.5}Mn_{0.5}PO₄ carbon compound material as the positive electrode active material.

First, iron oxalate dihydride (FeC₂O₄·2H₂O), manganese acetate tetrahydride (Mn(CH₃OO)₂), ammonium dihydrogen phosphate (NH₄H₂PO₄) and lithium carbonate (Li₂CO₃) were mixed together to a molar ratio of 1: 1: 2: 1. The resulting mixture was sufficiently pulverized by a ball mill for mixing. The resulting mixture was calcined in a nitrogen atmosphere at 300°C for two hours give a precursor. This precursor was mixed with graphite and acetylene black to give a weight ratio of 90 : 6: 4 and sufficiently pulverized by a ball mill for mixing. The so-calcined precursor was sintered in the nitrogen atmosphere at 450°C for 24 hours to synthesize the LiFe_{0.5}Mn_{0.5}PO₄ carbon compound material.

Using the LiFe_{0.5}Mn_{0.5}PO₄ carbon compound material, obtained as described above, as a positive electrode active material, a test cell was prepared in the same way as in Example 7.

### Comparative Example 3

As Comparative Example 3, LiFePO₄ was synthesized as a positive electrode active material and a test cell was fabricated using LiFePO₄ as the positive electrode active material.

First, iron oxalate dihydride (FeC₂O₄·2H₂O), ammonium dihydrogen phosphate (NH₄H₂PO₄) and lithium carbonate (Li₂CO₃) were mixed to a molar ratio of 2: 2: 1 and thoroughly pulverized and mixed by a ball mill. The resulting mixture was calcined in a nitrogen atmosphere at 300°C for two hours to yield a precursor. This precursor was sintered in a nitrogen atmosphere at 550°C for 24 hours to synthesize LiFePO₄.

A battery was prepared, using the LiFePO₄, obtained as described above, as a positive electrode active material. First, 87 wt% of the dried LiFePO₄, 10 wt% of graphite, as an electrically conductive agent, and 3 wt% of polyvinylidene fluoride, as a binder, were evenly mixed into N-methyl pyrrolidone as a solvent to prepare a paste-like positive electrode mixture. Meanwhile, #1300 manufactured by Aldrich Inc. was used as the polyvinylidene fluoride. This positive electrode mixture was applied to an aluminum mesh, as a current collector, and dried in situ in a dry argon atmosphere at 100°C for one hour to form a layer of the positive electrode active material. The aluminum mesh, on which the layer of the positive electrode active material was formed, was punched to a disc 15.5 mm in diameter to form a pellet-like positive electrode. Meanwhile, this positive electrode carries 60 mg of the active material. A metal lithium foil was punched to substantially the same shape as the positive electrode and used as a negative electrode. In a mixed solvent of equal parts in volume of propylene carbonate and dimethyl carbonate was dissolved LiPF₆ at a concentration of 1 mol/l to prepare a non-aqueous electrolytic solution.

The positive electrode, prepared as described above, was accommodated in the positive electrode can, whilst the negative electrode was accommodated in the negative electrode can and a separator was arranged between the positive electrode and the negative electrode. The non-aqueous electrolytic solution was charged into the positive electrode can and the negative electrode can. The positive and negative electrode cans were caulked fixedly through the insulating gasket 7 to complete a 2025 type coin-shaped non-aqueous electrolyte secondary battery.

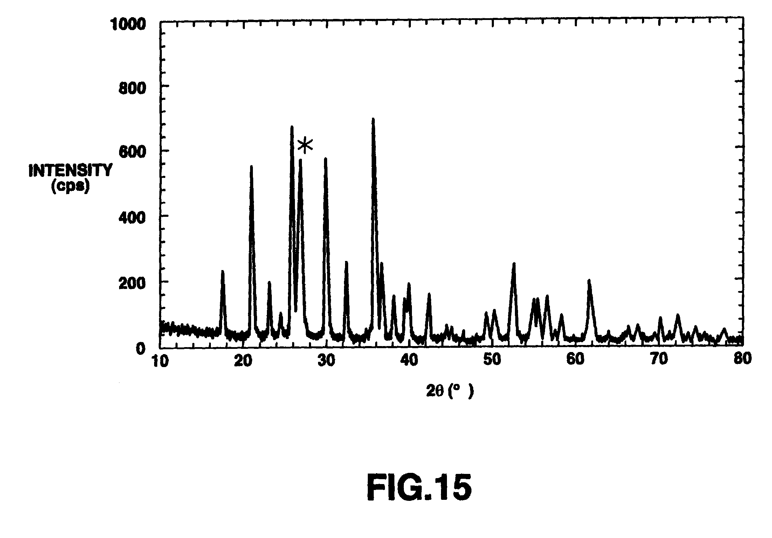

Of the compound samples, synthesized in the Examples 7 to 9, and LiFePO₄, prepared in the Comparative Example 3, the powder X-ray diffraction pattern was measured under the same measurement conditions shown in Experiment 1 above. The measured results of the powder X-ray diffraction are shown in Figs.15 to 18.

The powder X-ray diffraction pattern of LiFePO₄, synthesized in Example 7, is shown in Fig.15, from which it is seen that no impurities other than LiFePO₄ are confirmed in the product such that the product yielded is single-phase LiFePO₄. Meanwhile, in Fig.3, the peak attributable to the impurity is marked with an asterisk *.

The precursor was sintered at plural temperature points in a range from 320°C to 850°C to prepare the LiFePO₄ carbon compound material in the same manner as in Example 7. It was found that there was no impurity present in the LiFePO₄ carbon compound material thus testifying to the yielding of the single-phase LiFePO₄.

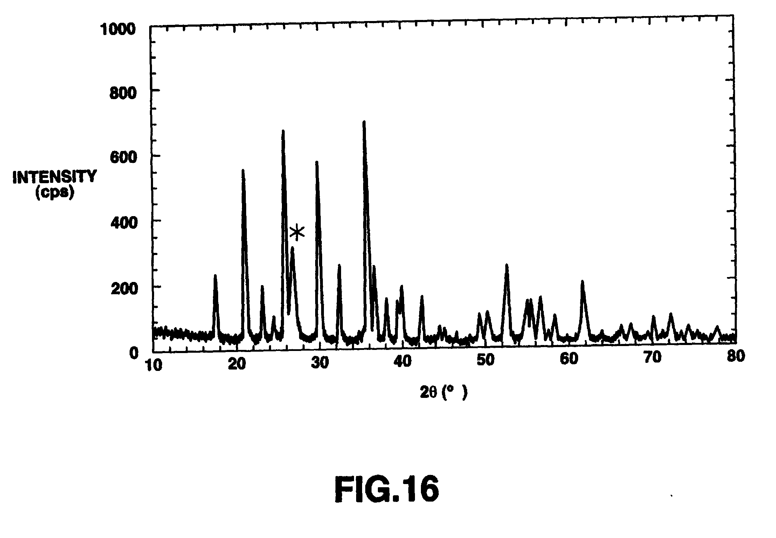

The powder X-ray diffraction pattern of the LiFePO₄ carbon compound material synthesized in Example 8 is shown in Fig. 16, from which it is seen that the presence of impurities other than LiFePO₄ is not confirmed in the product, except the diffraction peak of graphite at approximately 26°, thus testifying to the yielding of the single-phase LiFePO₄. In Fig.16, the peak attributable to graphite is indicated by an asterisk *.

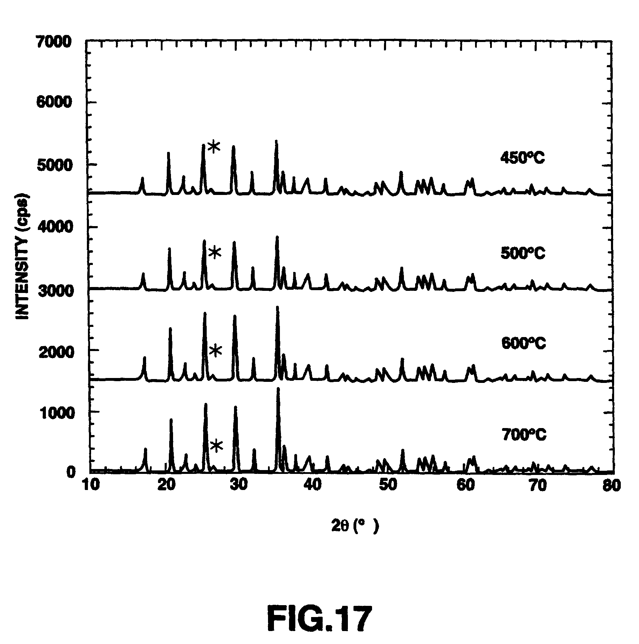

The powder X-ray diffraction pattern of the LiFe_{0.5}Mn_{0.5}PO₄ carbon compound material, synthesized in Example 9, is shown in Fig.9. The powder X-ray diffraction patterns of the LiFe_{0.5}Mn_{0.5}PO₄ carbon compound materials, synthesized with the sintering temperatures of 500°C, 600°C and 700°C, are also shown in Fig.17. It may be seen from Fig.17 that, in the LiFe_{0.5}Mn_{0.5}PO₄ carbon compound materials, synthesized at several temperature points in the range from 450°C to 850°C, the presence of impurities other than LiFePO₄ is not confirmed, except the diffraction peak of graphite at approximately 26°, thus testifying to the yielding of the single-phase LiFePO₄. In Fig. 16, the peak attributable to graphite is indicated by an asterisk *.

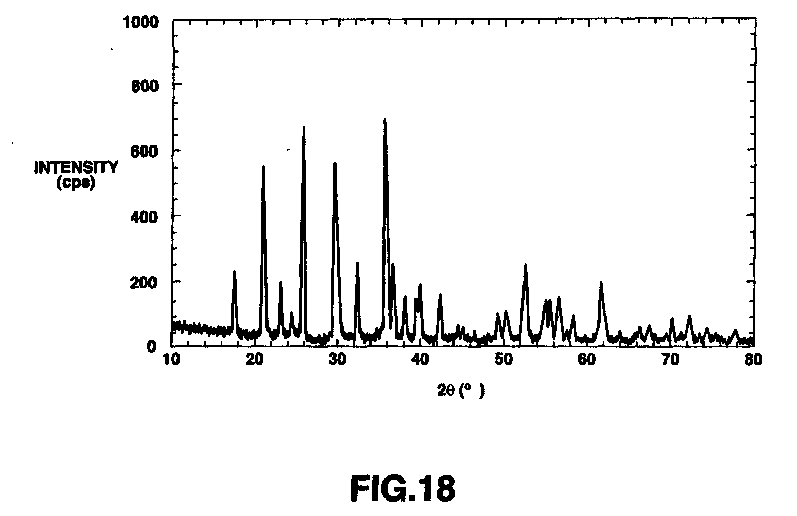

The powder X-ray diffraction pattern of LiFePO₄, synthesized in Comparative Example 3, is shown in Fig.18, from which it is seen that no impurities other than LiFePO₄ are confirmed to exist in the product such that the product yielded is single-phase LiFePO₄.

The following charging/discharging test was conducted on the test cells of the Examples 7 to 9 and the Comparative Example 3, prepared as described above, to evaluate battery characteristics.

As this charging/discharging test, each test cell was charged by constant current charging and, when the battery voltage reached 4.5V, the charging system was switched from the constant current charging to constant voltage charging, and charging was carried out as the voltage of 4.5 V was kept The charging was stopped when the current fell below 0.05 mA/cm². The discharging then was carried out and stopped at a time point when the battery voltage was lowered to 2.0 V.

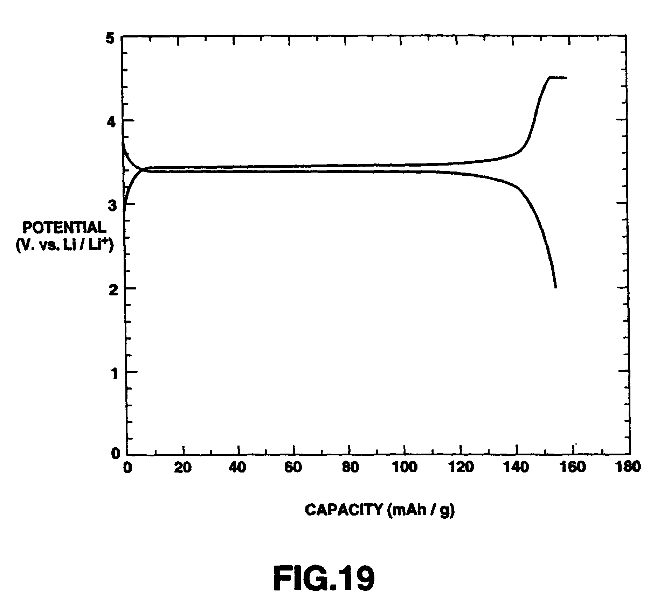

Both charging and discharging were carried out at ambient temperature (25°C) and, in evaluating charging/discharging characteristics, the current density was set to 0.12 mA/cm². In evaluating load characteristics, the charging/discharging test was conducted under various different current densities. The results of the above charging/discharging test are shown in Figs.19 to 23.

Of the battery of Example 7, the charging/discharging characteristics for the first to third cycles are shown in Fig.19, from which it is seen that the battery of Example 7 showed a flat potential in the vicinity of 3.4 V, thus indicating that the battery has a high reversible charging/discharging capacity of 155 mAh/g, which is close to the theoretical capacity of 170 mAh/g.

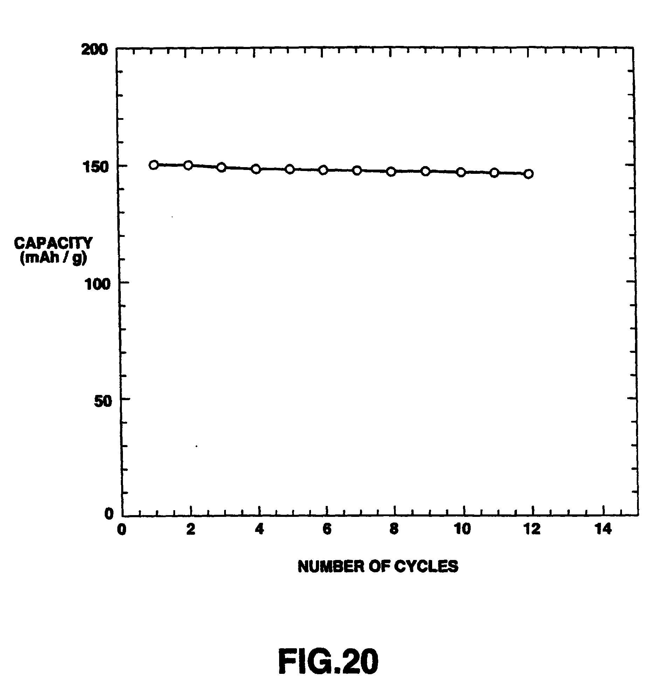

The relation between the number of cycles and the charging/discharging capacity of the battery of Example 7 is shown in Fig.20, from which it is seen that the battery of the Example 7 undergoes cyclic deterioration as low as 0.1%/cycle, thus demonstrating stable battery characteristics.

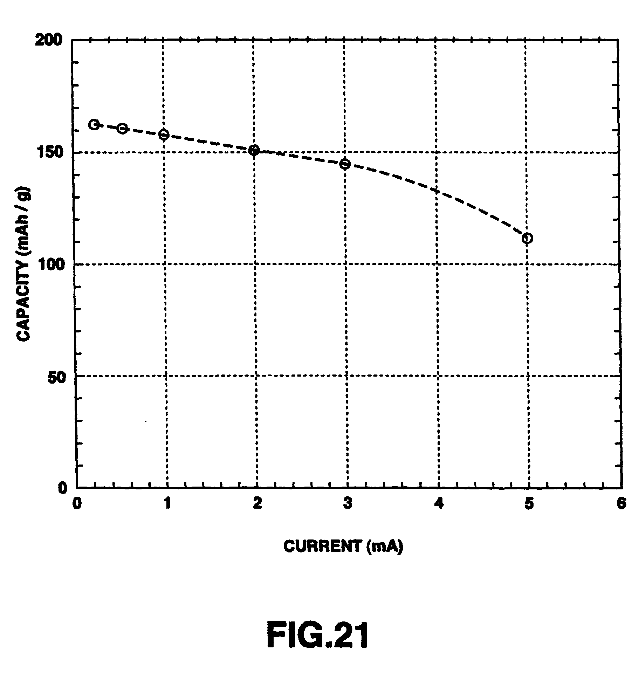

The load characteristics of the battery of Example 8 are shown in Fig.21, from which it is seen that, if charged/discharged at 0.2 mA, the battery of Example 8 gives a high capacity of 163 mAh/g, and that the reversible charging/discharging capacity for the charging/discharging current density of 2 mA/cm² is kept at 93% of that for the charging/discharging current density of 0.2 mA/cm².

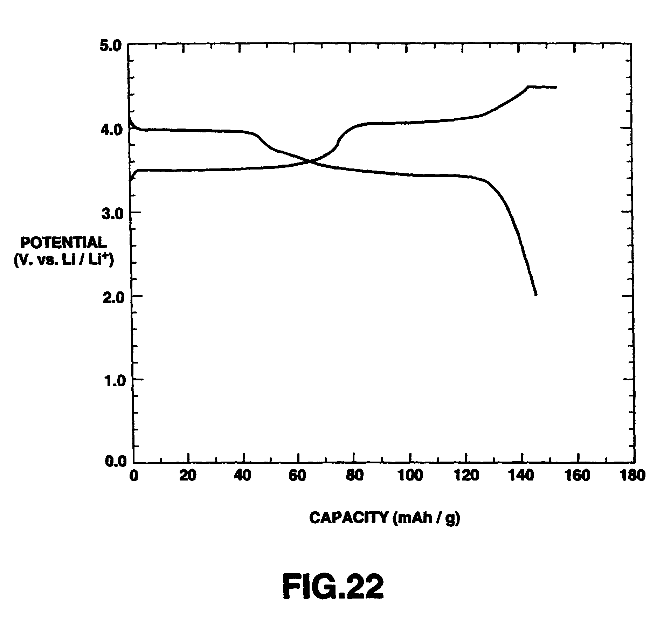

The charging/discharging characteristics of the battery of Example 9 are shown in Fig.22, from which it is seen that the battery of Example 9 has the reversible charging/discharging capacity of 146 mAh/g close to the theoretical capacity of 170 mAh/g, with the average discharging potential being 3.58 V.

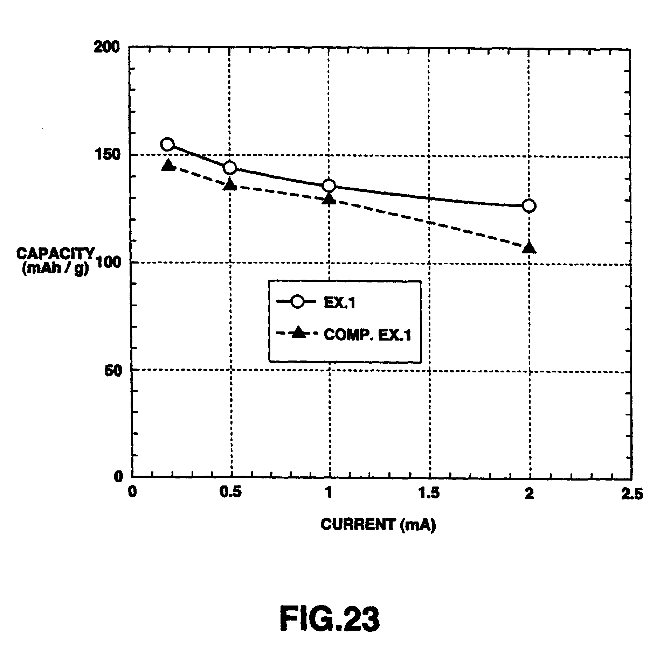

The load characteristics of the batteries of Example 7 and Comparative Example 3 are shown in Fig.23, from which it is seen that the reversible charging/discharging capacity for the charging/discharging current density of 1 mA/cm² is kept at 90% of that for the charging/discharging current density of 0.2 mA/cm². In the battery of the Comparative Example 3, the same amount of graphite as that used as the electrically conductive agent in Example 7 is added as the electrically conductive agent in the positive electrode mixture. However, the battery of the Comparative Example 3 is low in battery capacity and inferior in load characteristics as compared to the battery of Example 7.

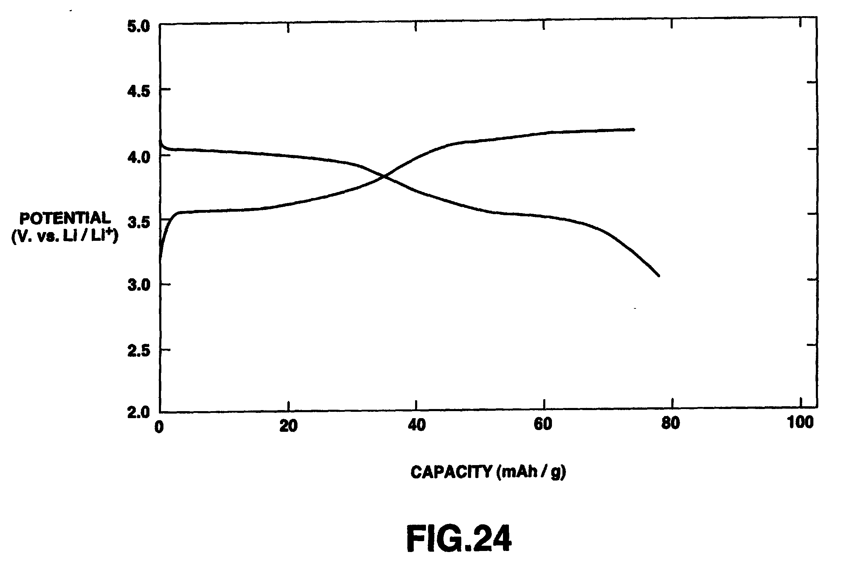

The charging/discharging curve of the battery employing LiFe_{0.5}Mn_{0.5}PO₄ solely as the positive electrode mixture according to the teaching of the publication J. Electroche. Soc. 144,1188 (1997), is shown in Fig.11. Meanwhile, the battery employing LiFe_{0.5}Mn_{0.5}PO₄ solely as the positive electrode mixture is the battery of Comparative Example 4. It is seen from Fig.24 that the battery of the Comparative Example 4 has the battery capacity was low as 75 mAh/g.

The above results indicate that the batteries of Examples 7 and 8 are non-aqueous electrolyte secondary batteries containing LiFPO₄ and carbon as the positive electrode active material and as the electrically conductive material, respectively, and hence are superior in load characteristics and of high capacity as compared to the battery o the Comparative Example 3 employing solely the compound of the general formula LiFePO₄ as the positive electrode mixture. On the other hand, the battery of Example 9 is the non-aqueous electrolyte secondary battery containing LiFePO₄ and carbon as the positive electrode active material and as the electrically conductive material, respectively, and hence is superior in load characteristics and of high capacity as compared to the battery of the Comparative Example 4 containing solely the compound represented by the general formula LiFePO₄ and carbon as the compound sample as the positive electrode active material and as the electrically conductive agent, respectively.

It is also seen from Figs.23 and 21 that, on comparing Examples 7 and 8, the battery of Example 8 is superior in load characteristics to the battery of Fig.7 in which graphite alone is added to the precursor. From this it is seen that, with the non-aqueous electrolyte secondary battery, load characteristics may be improved by employing graphite and acetylene black in combination as carbon in synthesizing the positive electrode active material.

Comparison of the Examples 7 and 8 in Figs.19 and 22 also reveals that the battery of Example 9 has a higher value of the discharging potential. Form this it is seen that, by employing the LiFe_{0.5}Mn_{0.5}PO₄ carbon compound material as the positive electrode active material, it is possible to realize a non-aqueous electrolyte secondary battery of higher capacity and higher voltage value.

### 〈Experiment 3-2〉

In the experiment 3-2, a variety of positive electrode active materials containing LiMnPO₄ were synthesized and non-aqueous electrolyte secondary batteries containing these positive electrode active materials were prepared, and evaluation was made of difference in characteristics of the respective non-aqueous electrolyte secondary batteries.

### Example 10

As a positive electrode active material, LiFePO₄ carbon compound material was synthesized and a test cell containing the LiFePO₄ carbon compound material as the positive electrode active material was prepared.

First, manganese carbonate (MnCO₃), ammonium dihydrogen phosphate (NH₄H₂PO₄) and lithium carbonate (Li₂CO₃) were mixed to a molar ratio of 2: 2: 1 and thoroughly pulverized and mixed by a ball mill. The resulting mixture was calcined in a nitrogen atmosphere at 280°C for three hours to yield a precursor. This precursor and acetylene black were mixed to a weight ratio of 95:5 and pulverized sufficiently by a ball mill for mixing. The precursor then was sintered in a nitrogen atmosphere at 600°C for 24 hours to synthesize an LiFePO₄ carbon compound material.

A battery was prepared, using the LiFePO₄, obtained as described above, as a positive electrode active material. First, 97 wt% of the dried LiFePO₄ carbon compound material, 10 wt% of graphite, and 3 wt% of polyvinylidene fluoride, as a binder, were evenly mixed into N-methyl pyrrolidone as a solvent to prepare a paste-like positive electrode mixture. Meanwhile, #1300 manufactured by Aldrich Inc. was used as the polyvinylidene fluoride. This positive electrode mixture was applied to an aluminum mesh, as a current collector, and dried in situ in a dry argon atmosphere at 100°C for one hour to form a layer of the positive electrode active material. The aluminum mesh, on which the layer of the positive electrode active material was formed, was punched to a disc 15.5 mm in diameter to form a pellet-like positive electrode. Meanwhile, this positive electrode carries 60 mg of the active material. A metal lithium foil was punched to substantially the same shape as the positive electrode and used as a negative electrode. In a mixed solvent of equal parts in volume of propylene carbonate and dimethyl carbonate was dissolved LiPF₆ at a concentration of 1 mol/l to prepare a non-aqueous electrolytic solution.

The positive electrode, prepared as described above, was accommodated in the positive electrode can, whilst the negative electrode was accommodated in the negative electrode can and a separator was arranged between the positive electrode and the negative electrode. The non-aqueous electrolytic solution was charged into the positive electrode can and the negative electrode can. The positive and negative electrode cans were caulked fixedly through the insulating gasket 7 to complete a 2025 type coin-shaped non-aqueous electrolyte secondary battery.

### Example 11

An LiFePO₄ carbon compound material was prepared in the same way as in Example 10 except mixing the precursor and acetylene black in a weight ratio of 90:10. Using this LiFePO₄ carbon compound material as the positive electrode mixture, a test cell was prepared in the same way as in Example 10.

### Example 12

The LiFePO₄ carbon compound material was synthesized in the same way as in Example 10 to synthesize LiFePO₄ carbon compound material. Using this LiFePO₄ carbon compound material as the positive electrode mixture, a test cell was prepared in the same way as in Example 10.

### Comparative Example 5

As a positive electrode active material, LiMnPO₄ was synthesized and a test cell containing the LiFePO₄ carbon compound material as the positive electrode active material was prepared.

First, manganese carbonate (MnCO₃), ammonium hydrogen phosphate (NH₄H₂PO₄) and lithium carbonate (Li₂CO₃) were mixed to a molar ratio of 2: 2: 1 and thoroughly pulverized and mixed by a ball mill. The resulting mixture was calcined in a nitrogen atmosphere at 300°C for three hours to yield a precursor. This precursor then was sintered in a nitrogen atmosphere at 600°C for 24 hours to synthesize LiMnPO₄.

For preparing a battery employing LiMnPO₄, obtained as described above, as the positive electrode active material, a test cell was prepared in the same way as in Example 10, except evenly mixing 85 wt% of dried LiMnPO₄ as a positive electrode mixture, 10 wt% of graphite as an electrically conductive agent and 10 wt% of polyvinylidene fluoride as a binder, in N-methyl pyrrolidone, as a solvent, to prepare a paste-like positive electrode mixture.

Of the compound samples of Examples 10 to 12, synthesized as described above, and LiMnPO₄ of Comparative Example 5, a powder X-ray diffraction pattern was measured in accordance with the method and conditions described above.

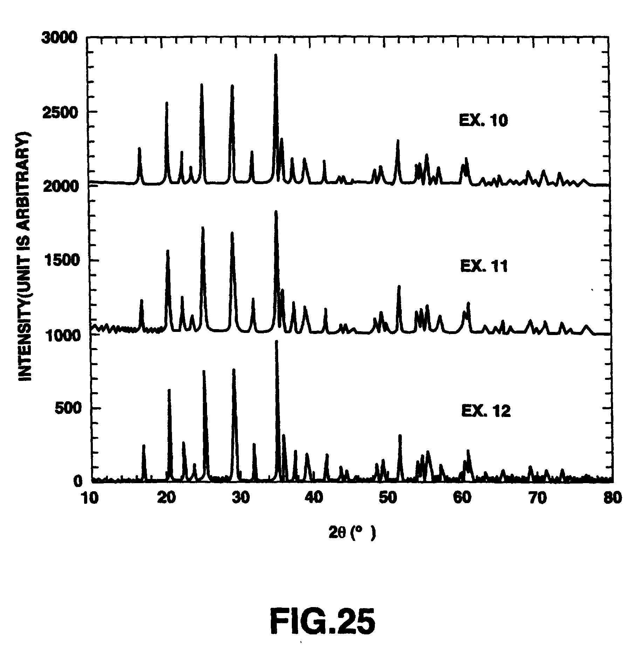

The powder X-ray diffraction pattern of the LiMnPO₄ carbon compound material, synthesized in accordance with Examples 10 to 12, is shown in Fig.25, from which it is seen that no impurities other than LiMnPO₄ is confirmed to exist in the product, such that the product yielded is single-phase LiFePO₄.

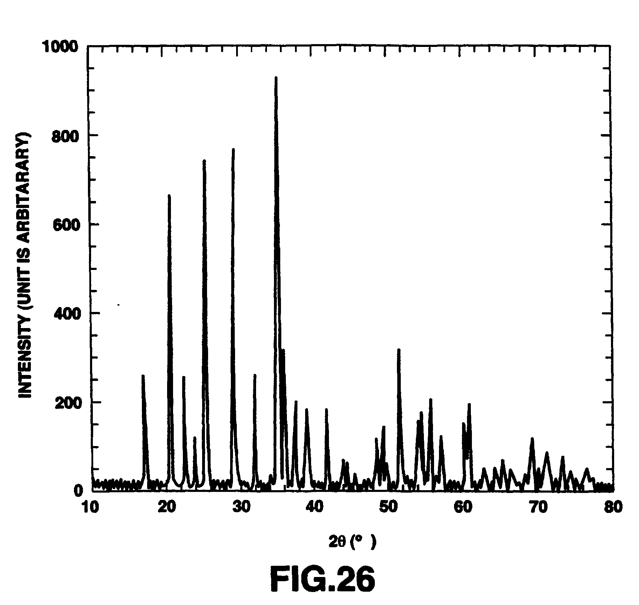

The powder X-ray diffraction pattern of the LiMnPO₄ carbon compound material, synthesized in accordance with Comparative Example 5, is shown in Fig.26, from which it is seen that no impurities other than LiMnPO₄ is confirmed to exist in the product such that the product yielded is single-phase LiFePO₄.

The following charging/discharging test was conducted on the test cells of the Example 11 and the Comparative Example 5, prepared as described above, to evaluate battery characteristics. As this charging/discharging test, each test cell was charged by constant current charging with the current of 0.5 mA/cm². When the battery voltage reached 4.5V, the charging system was switched from the constant current charging to constant voltage charging, and charging was carried out as the voltage of 4.5 V was kept. The charging was stopped when the current fell below 0.05 mA/cm². The discharging then was carried out and stopped at a time point when the battery voltage was lowered to 2.0 V.

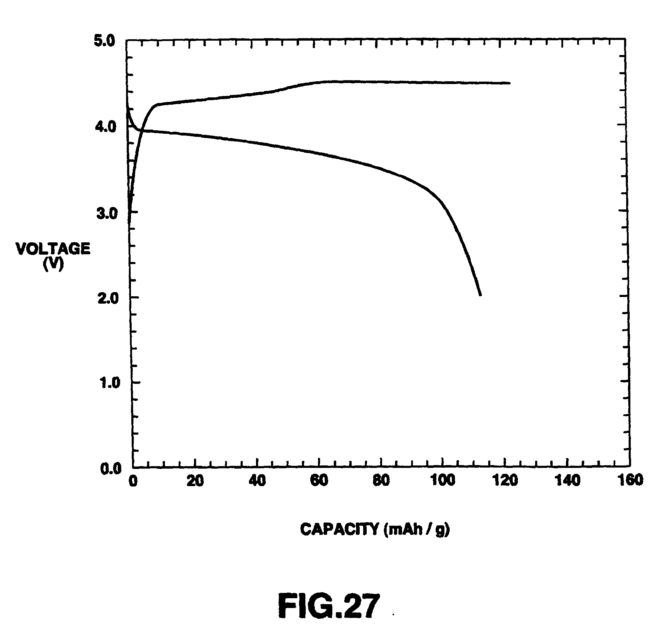

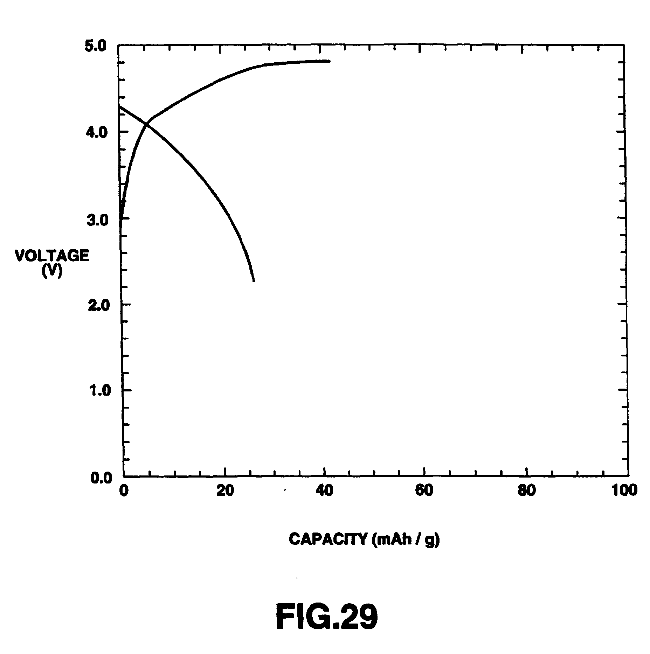

The following charging/discharging test was conducted on the test cell of the Example 12, prepared as described above, to evaluate battery characteristics. As this charging/discharging test, the test cell was charged by constant current charging with the current of 0.5 mA/cm². When the battery voltage reached 4.5V, the charging system was switched from the constant current charging to constant voltage charging, and charging was carried out as the voltage of 4.8 V was kept. The charging was stopped when the current fell below 0.05 mA/cm². The discharging then was carried out and stopped at a time point when the battery voltage was lowered to 2.0 V. Meanwhile, the battery charging and discharging were carried out at an ambient temperature (23°C). The results obtained by this charging/discharging test are shown in Figs.27 to 29.

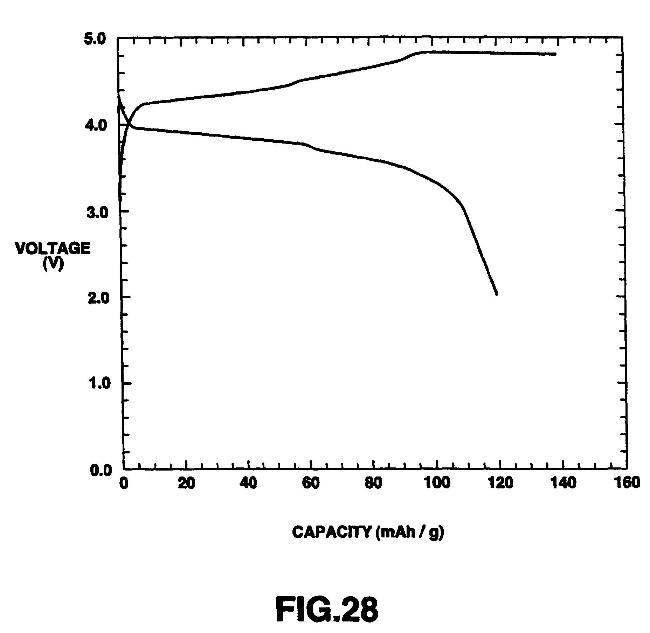

Fig.27 shows a graph representing charging/discharging characteristics for the battery of Example 11. It is seen from Fig.27 that the battery of Fig.11 has a flat potential in the vicinity of 4V and generates the reversible charging/discharging capacity of 113 mAh/g. On the other hand, the charging/discharging characteristics of the battery of Example 12 are shown in a graph of Fig.28, from which it is seen that the discharging voltage is high, with the discharging capacity being as large as 120 mAh/g. Conversely, the battery of Comparative Example 5 is free of a flat discharging area, with there occurring no Mn oxidation.

It may be seen from the above results that the batteries of Examples 11 and 12 are non-aqueous electrolyte secondary batteries obtained by using a synthesized compound sample composed of LiMnPO₄ as a positive electrode mixture and of acetylene black as an electrically conductive agent, such that these batteries are superior in load characteristics and of high capacity as compared to the battery of Comparative Example 5 employing LiFePO₄ as the positive electrode active material.

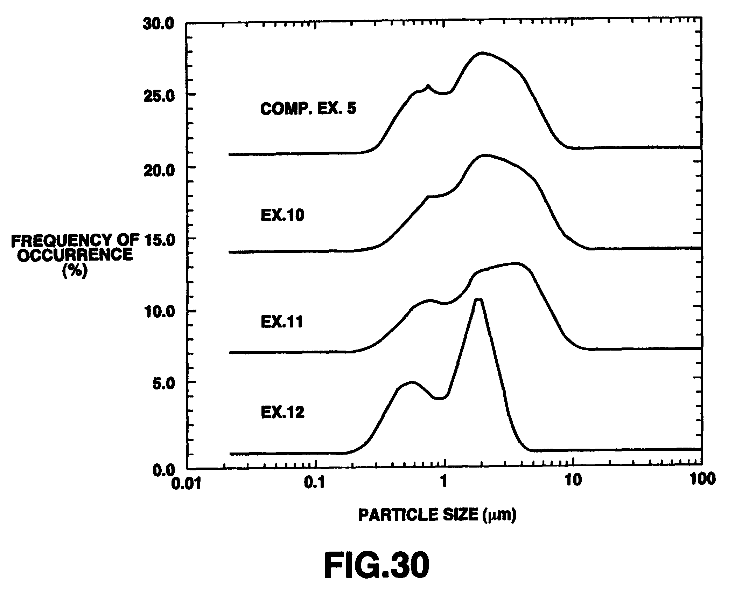

For measuring the volume grain size distribution of the LiMnPO₄ carbon compound material of Examples 10 to 12 and LiMnPO₄ of Comparative Example 5, the scattering of the laser light was measured using a volume grain size distribution measurement device, manufactured by HORIBA SEISAKUSHO CO. LTD. under the trade name of Micro-Lack grain size analyzer LA-920. The measured results of the volume grain size distribution are shown in Fig.30, from which is seen that the LiMnPO₄ carbon compound material and LiMnPO₄ all contain particles not larger than 10 µm.

By representing the volume grain size distribution of the LiMnPO₄ carbon compound material of Example 12 by integrated amount of passed grains, it has been seen that the grain size in its entirety is not more than 6 µm. That is, by adding carbon to the synthetic material of LiMnPO₄ or to the precursor, the grain growth of the precursor during the sintering process can be suppressed to realize more homogeneous finer compound sample.

### Industrial Applicability

As may be seen from the foregoing description, the manufacturing method of the positive electrode mixture according to the present invention adds a reducing agent to the precursor during the mixing process. Since this prevents the 3d transition metal M in the synthetic starting material from being oxidized by residual oxygen, thus yielding a single-phase LiₓM_{y}PO₄ free of impurities, it is possible to prepare a positive electrode active material capable of reversibly and satisfactorily doping/undoping lithium.

Moreover, in the manufacturing method for the non-aqueous electrolyte secondary battery according to the present invention, a reducing agent is added to the precursor during the mixing process. This prevents the 3d transition metal M in the synthetic starting material from being oxidized by residual oxygen to yield a single-phase LiₓM_{y}PO₄ free of impurities. This LiₓM_{y}PO₄ renders it possible to produce a non-aqueous electrolyte secondary battery of high capacity because lithium is diffused sufficiently in the grains.

Moreover, with the manufacturing method of the positive electrode active material according to the present invention, air contained in the precursor is removed in the de-aerating process. This prevents the 3d transition metal M in the starting material for synthesis from being oxidized by residual oxygen to yield single-phase LiₓM_{y}PO₄ free of impurities, thus enabling the manufacture of a positive electrode active material capable of reversibly and satisfactorily doping/undoping lithium.

Moreover, with the manufacturing method of the positive electrode active material according to the present invention, air contained in the precursor is removed in the de-aerating process in preparing the positive electrode active material. This prevents the 3d transition metal M in the starting material for synthesis from being oxidized by residual oxygen to yield single-phase LiₓM_{y}PO₄ free of impurities. With this LiₓM_{y}PO₄, since lithium diffusion in the particle occurs sufficiently, it becomes possible to produce a high-capacity non-aqueous electrolyte secondary battery.

In addition, in the manufacturing method for the positive electrode active material according to the present invention, an electrically conductive agent is added to the starting material for synthesis or to the precursor of the positive electrode active material. The positive electrode active material produced exhibits superior load characteristics and electrode molding performance thus realizing a high capacity.

Moreover, in the manufacturing method for the positive electrode active material according to the present invention, an electrically conductive agent is added to the starting material for synthesis or to the precursor in synthesizing the positive electrode active material. Since the positive electrode active material produced thus exhibits superior load characteristics and electrode molding performance, the non-aqueous electrolyte secondary battery produced exhibits high capacity as the non-aqueous electrolyte secondary battery.

## Claims

1. A method for producing a positive electrode active material comprising:
a mixing step of mixing a plurality of substances to give a precursor, said substances proving a starting material for synthesis of a compound represented by the general formula LiₓM_{y}PO₄ where x is such that 0 < x ≤ 2, y is such that 0.8 ≤ y ≤ 1.2 and M includes at lest one of 3d transition metals; and
a sintering step of sintering and reacting said precursor obtained by said mixing step;
wherein a reducing agent is added to said precursor in said mixing step.

2. The method for producing a positive electrode active material according to claim 1 wherein said LiₓM_{y}PO₄ is LiFePO₄.

3. The method for producing a positive electrode active material according to claim 2 wherein said reducing agent is Fe which is also a part of said starting material for synthesis.

4. A method for producing a non-aqueous electrolyte secondary battery having a positive electrode containing a positive electrode active material capable of reversibly doping/undoping lithium, a negative electrode mounted facing said positive electrode and capable of reversibly doping/undoping lithium, and a non-aqueous electrolyte interposed between said positive electrode and the negative electrode, said positive electrode active material being produced by a method comprising:
a mixing step of mixing a plurality of substances to give a precursor, said substances proving a starting material for synthesis of a compound represented by the general formula LiₓM_{y}PO₄ where x is such that 0 < x ≤ 2, y is such that 0.8 ≤ y ≤ 1.2 and M includes at lest one of 3d transition metals; and
a sintering step of sintering and reacting said precursor obtained by said mixing step;
wherein a reducing agent is added to said precursor in said mixing step to prepare said positive electrode active material.

5. The method for producing a non-aqueous electrolyte secondary battery according to claim 4 wherein said LiₓM_{y}PO₄ is LiFePO₄.

6. The method for producing a non-aqueous electrolyte secondary battery according to claim 5 wherein said reducing agent is Fe which is also a part of said starting material for synthesis.

7. A method for producing a positive electrode active material comprising:
a mixing step of mixing a plurality of substances to give a precursor, said substances proving a starting material for synthesis of a compound represented by the general formula LiₓM_{y}PO₄ where x is such that 0 < x ≤ 2, y is such that 0.8 ≤ y ≤ 1.2 and M includes at lest one of 3d transition metals;
a de-aerating step of removing air contained in said precursor obtained in said mixing step;
a sintering step of sintering and reacting said precursor obtained by said mixing step.

8. The method for producing a positive electrode active material according to claim 7 wherein an inert gas is introduced after substituting vacuum for an atmosphere in said precursor and subsequently an inert gas is introduced to remove air contained in said precursor.

9. The method for producing a positive electrode active material according to claim 7 wherein a solvent is allowed to co-exist with the precursor in said de-aerating step and is vaporized off in said inert gas to remove air contained in said precursor.

10. The method for producing a non-aqueous electrolyte secondary battery according to claim 7 wherein said LiₓM_{y}PO₄ is LiFePO₄.

11. A method for producing a non-aqueous electrolyte secondary battery having a positive electrode containing a positive electrode active material capable of reversibly doping/undoping lithium, a negative electrode mounted facing said positive electrode and capable of reversibly doping/undoping lithium, and a non-aqueous electrolyte interposed between said positive electrode and the negative electrode, said positive electrode active material being produced by a method comprising:
a mixing step of mixing a plurality of substances to give a precursor, said substances proving a starting material for synthesis of a compound represented by the general formula LiₓM_{y}PO₄ where x is such that 0 < x ≤ 2, y is such that 0.8 ≤ y ≤ 1.2 and M includes at least one of 3d transition metals;
a de-aerating step of de-aerating air contained in said precursor obtained in said mixing step; and
a sintering step of sintering and reacting said precursor obtained in a state free of air by said de-aerating step.

12. The method for producing a non-aqueous electrolyte secondary battery according to claim 11 wherein an inert gas is introduced after substituting vacuum for an atmosphere in said precursor and subsequently an inert gas is introduced to remove air contained in said precursor.

13. The method for producing a non-aqueous electrolyte secondary battery according to claim 11 wherein a solvent is allowed to co-exist with the precursor in said de-aerating step and is vaporized off in said inert gas to remove air contained in said precursor.

14. The method for producing a non-aqueous electrolyte secondary battery according to claim 11 wherein said LiₓM_{y}PO₄ is LiFePO₄.

15. A method for producing a positive electrode active material comprising:
a mixing step of mixing a plurality of substances to give a precursor, said substances proving a starting material for synthesis of a compound represented by the general formula LiₓM_{y}PO₄ where x is such that 0 < x ≤ 2, y is such that 0.8 ≤ y ≤ 1.2 and M includes at lest one of 3d transition metals; and
a sintering step of sintering and reacting said precursor obtained by said mixing step;
wherein an electrically conductive agent is added to said starting material for synthesis or said precursor.

16. The method for producing a positive electrode active material according to claim 15 wherein said electrically conductive agent is added in an amount of 0.5 to 20 parts by weight to 100 parts by weight of said LiₓM_{y}PO₄.

17. The method for producing a positive electrode active material according to claim 15 wherein said LiₓM_{y}PO₄ is LiFePO₄.

18. The method for producing a positive electrode active material according to claim 15 wherein said LiₓM_{y}PO₄ is LiFeₓMn₁₋ₓPO₄.

19. The method for producing a positive electrode active material according to claim 15 wherein said LiₓM_{y}PO₄ is LiₓMn_{y}PO₄ where x is such that 0 < x ≤ 2 and y is such that 0.8 ≤ y ≤ 1.2.

20. The method for producing a positive electrode active material according to claim 15 wherein said electrically conductive agent is carbon.

21. A method for producing a non-aqueous electrolyte secondary battery having a positive electrode active material capable of reversibly doping/undoping lithium, a negative electrode mounted facing said positive electrode and capable of reversibly doping/undoping lithium, and a non-aqueous electrolyte interposed between said positive electrode and the negative electrode,
wherein said positive electrode active material is synthesized by a mixing step of mixing a plurality of substances to give a precursor, said substances proving a starting material for synthesis of a compound represented by the general formula LiₓM_{y}PO₄ where x is such that 0 < x ≤ 2, y is such that 0.8 ≤ y ≤ 1.2 and M includes at lest one of 3d transition metals and a sintering step of sintering and reacting said precursor obtained by said mixing step, and wherein an electrically conductive agent is added to said starting material for synthesis or to said precursor to synthesize said positive electrode active material.

22. The method for producing a non-aqueous electrolyte secondary battery according to claim 21 wherein said electrically conductive agent is added in an amount of 0.5 to 20 parts by weight to 100 parts by weight of said LiₓM_{y}PO₄.

23. The method for producing a non-aqueous electrolyte secondary battery according to claim 21 wherein said LiₓM_{y}PO₄ is LiFePO₄.

24. The method for producing a non-aqueous electrolyte secondary battery according to claim 21 wherein said LiₓM_{y}PO₄ is LiFeₓMn₁₋ₓPO₄.

25. The method for producing a non-aqueous electrolyte secondary battery according to claim 21 wherein said LiₓM_{y}PO₄ is LiₓMn_{y}PO₄ where x is such that 0 < x ≤ 2 and y is such that 0.8 ≤ y ≤ 1.2.

26. The method for producing a non-aqueous electrolyte secondary battery according to claim 21 wherein said electrically conductive agent is carbon.
